# FASCICULE DE BREVET EUROPEEN

(11) **EP 4 068 818 B1**
(45) Date de publication et mention de la délivrance du brevet: **26.08.2026**
(21) Numéro de dépôt: 22165678.8
(22) Date de dépôt: 30.03.2022
(51) Int. Cl.: H04W 4/70, H04W 12/08, H04W 12/64, H04W 12/72, H04W 12/126, H04W 4/02

(54) **PROCÉDÉ DE GESTION DE SÉCURITÉ DANS UN SYSTÈME DE COMMUNICATION DE DONNÉES, ET SYSTÈME POUR LA MISE EN OEUVRE DU PROCÉDÉ**
VERFAHREN ZUR SICHERHEITSVERWALTUNG IN EINEM DATENKOMMUNIKATIONSSYSTEM UND SYSTEM ZUR UMSETZUNG DIESES VERFAHRENS
MANAGEMENT METHOD FOR SECURITY IN A DATA COMMUNICATION SYSTEM, AND SYSTEM FOR IMPLEMENTING THE METHOD

(30) Priorité: 01.04.2021 FR 2103394
(43) Date de publication de la demande: 05.10.2022
(73) Titulaire: Electricité de France, 75008 Paris (FR)
(72) Inventeur: LUCIDARME, Thierry, 78460 CHEVREUSE (FR); AUDEBERT, Vincent, 91120 PALAISEAU (FR)
(74) Mandataire: Plasseraud IP

(56) Documents cités:
- CN-A- 112 260 995
- US-A1- 2018 054 795
- US-B1- 9 781 602

## Description

### Domaine technique

La présente invention se rapporte à un procédé de gestion de sécurité dans un système de communication de données, ainsi qu'à un équipement et un système informatique pour la mise en œuvre de ce procédé. Elle s'applique notamment aux systèmes de communication de données comprenant un ou plusieurs réseaux électriques intelligents et des équipements terminaux intelligents connectés.

### Technique antérieure

Le développement par l'organisation 3GPP (de l'anglais « Third Generation Partnership Project) de spécifications techniques pour systèmes sans fil de cinquième génération (5G) conduisent à envisager le déploiement prochain de réseaux 5G dans le cadre d'applications de type verticale, comme par exemple la gestion de compteurs intelligents de consommation d'énergie électrique. Des équipements terminaux intelligents, dits IED (de l'anglais « Intelligent Electronic Device »), seront connectés à des réseaux de communication de données afin d'échanger des données avec un ou plusieurs serveurs applicatifs de gestion de services fournis par un opérateur de service dédié disposant de sa propre infrastructure de réseau ou par des entreprises de fourniture de service (en anglais « utility companies ») opérant un réseau. L'utilisation de réseaux sans fil 5G est ainsi anticipée dans le cadre de réseaux électriques intelligents (en anglais « smart grid ») utilisant des équipements IED connectés à un réseau 5G.

L'utilisation d'équipements IED connectés à un réseau 5G dans le cadre de réseaux de type « smart grid » peut conduire à déployer des fonctions de sécurité (authentification, chiffrement, intégrité) spécifiées pour les réseaux 5G pour sécuriser les échanges de données entre un équipement IED et un serveur du réseau électrique intelligent. Ces fonctions de sécurité peuvent par exemple être mises en œuvre dans le cadre d'une connexion d'un équipement IED à des applications d'opération ou de maintenance pilotées par des serveurs distants du réseau intelligent.

Par exemple, un équipement de surveillance ou de mesure d'un équipement de réseau, doté d'un modem 5G, peut être avantageusement piloté par une application distante en mode SAAS (de l'anglais « Software As A Service »). Dès lors que l'équipement utilisé est compatible avec la norme 5G, il embarque un ensemble de fonctions de sécurité qui peuvent être mises en œuvre lors des connexions de l'équipement à l'application distante.

Toutefois, un équipement connecté à un réseau intelligent peut avoir un mode de fonctionnement dans lequel il n'est actif pour des échanges de données avec le réseau que sporadiquement, des périodes dans lesquelles l'équipement est en mode veille et ne transmet aucune donnée plus ou moins longues (d'une durée d'un ou plusieurs jours, un ou plusieurs mois, voire même une ou plusieurs années) étant entrecoupées par des passages en mode actif pour transmettre au réseau des données (par exemple des mesures ou des alertes).

La possibilité d'une attaque de sécurité tirant avantage de la durée d'une de ces périodes de veille soulève le problème des risques de sécurité pour des équipements de télécommunications connectés à un réseau et inactifs pendant des périodes de veille. La demande de brevet chinois n° CN 112 260 995 A décrit un procédé d'authentification multi-facteurs d'un terminal pour l'accès à un système Internet des objets (IoT).

### Résumé

La présente divulgation vient améliorer la situation.

Selon un premier aspect, il est proposé un procédé de gestion de sécurité dans un système de communication de données pour l'échange de données entre un équipement et un serveur applicatif du système, le système comprenant un premier réseau de communication de données, couplé de manière opérationnelle à un deuxième réseau de communication de données, le procédé comprenant, dans une unité de gestion de sécurité du système mise en œuvre dans un nœud du deuxième réseau de communication : obtenir une première information de localisation de l'équipement ; sur détermination d'un changement d'activité présumé de l'équipement, obtenir une deuxième information de localisation de l'équipement ; effectuer une vérification de concordance entre la première information de localisation de l'équipement et la deuxième information de localisation de l'équipement ; et lorsque la première information de localisation de l'équipement et la deuxième information de localisation de l'équipement ne sont pas concordantes, générer un refus d'accès au serveur applicatif pour l'équipement, par exemple sous la forme d'un message d'échec d'authentification de l équipement, dans lequel la première information de localisation de l'équipement est reçue en réponse à une première requête présentée à l'équipement ou à un serveur du système de communication de données.

Les caractéristiques exposées dans les paragraphes suivants peuvent, optionnellement, être mises en œuvre. Elles peuvent être mises en œuvre indépendamment les unes des autres ou en combinaison les unes avec les autres :
Dans un ou plusieurs modes de réalisation dans lesquels le système comprend en outre une base de données comprenant une correspondance entre un identifiant de l'équipement dans le système et la première information de localisation de l'équipement, le procédé peut comprendre en outre : envoyer à la base de données une requête d'obtention d'information de localisation, la requête comprenant l'identifiant de l'équipement, et recevoir en réponse la première information de localisation de l'équipement.

Dans un ou plusieurs modes de réalisation, la deuxième information de localisation de l'équipement peut être reçue en réponse à une deuxième requête présentée à l'équipement objet du changement d'activité présumé ou à un serveur du système de communication de données suite à la détermination du changement d'activité présumé de l'équipement.

En fonction du mode de réalisation, le serveur peut être par exemple un serveur de localisation, un serveur de gestion de mobilité ou un serveur de gestion d'abonnés.

Dans un ou plusieurs modes de réalisation dans lesquels le premier réseau de communication de données utilise une première fonction de sécurité pour sécuriser les communications de données au sein du premier réseau, et le deuxième réseau de communication de données utilise une deuxième fonction de sécurité pour sécuriser les communications de données au sein du deuxième réseau, le changement d'activité présumé de l'équipement peut être déterminé sur réception d'une requête d'authentification utilisant un identifiant de l'équipement dans le système selon la première ou la deuxième fonction de sécurité pour l'accès au serveur applicatif.

Dans un ou plusieurs de ces modes de réalisation, la deuxième information de localisation peut comprendre une troisième information de localisation obtenue sur la base d'une adresse réseau comprise dans la requête d'authentification de l'équipement selon la première ou la deuxième fonction de sécurité pour l'accès au serveur applicatif.

Dans un ou plusieurs modes de réalisation, le changement d'activité présumé de l'équipement peut être déterminé sur détection d'une sortie de l'équipement d'un mode de veille dans le premier réseau de communication de données.

Dans un ou plusieurs modes de réalisation, le premier réseau de communication peut être un réseau de radiocommunication cellulaire, et la première information de localisation et/ou la deuxième information de localisation peuvent comprendre une information de localisation de l'équipement de type identifiant de cellule, zone de suivi, TDOA (de l'anglais « Time Difference of Arrival »), GPS (de l'anglais « Global Positioning System »), Galileo, Beidou, Glonass et/ou GNSS (de l'anglais « Global Navigation Satellite System »).

Selon un autre aspect, un dispositif de gestion de sécurité dans un système de communication de données est proposé, qui comprend un processeur, une interface de communications de données et une mémoire couplées de manière opérationnelle au processeur, dans lequel le processeur est configuré pour la mise en œuvre d'un procédé selon l'un des modes de réalisation proposés dans la présente demande.

Un autre aspect concerne un programme d'ordinateur, chargeable dans une mémoire associée à un processeur, et comprenant des portions de code pour la mise en œuvre des étapes d'un procédé selon l'un des modes de réalisation proposés dans la présente demande lors de l'exécution dudit programme par le processeur.

Un autre aspect concerne un ensemble de données représentant, par exemple par voie de compression ou d'encodage, un programme d'ordinateur tel que proposé dans la présente demande.

Un autre aspect concerne un support de stockage non-transitoire d'un programme exécutable par ordinateur, comprenant un ensemble de données représentant un ou plusieurs programmes, lesdits un ou plusieurs programmes comprenant des instructions pour, lors de l'exécution desdits un ou plusieurs programmes par un ordinateur comprenant un processeur couplé de manière opérationnelle à une mémoire et à une interface entrées/sorties de communication de données, conduire l'ordinateur à gérer un dispositif selon un procédé selon l'un des modes de réalisation proposés dans la présente demande.

Un autre aspect concerne un support de stockage non-transitoire d'un programme exécutable par ordinateur, comprenant un ensemble de données représentant un ou plusieurs programmes, lesdits un ou plusieurs programmes comprenant des instructions pour, lors de l'exécution desdits un ou plusieurs programmes par un ordinateur comprenant une unité de traitement couplée de manière opérationnelle à des moyens mémoire et à un module d'interface entrées/sorties, conduire l'ordinateur à mettre en œuvre un procédé selon l'un des modes de réalisation proposés dans la présente demande.

### Brève description des dessins

D'autres particularités et avantages de la présente divulgation apparaîtront dans la description ci-après d'exemples de réalisation non limitatifs, en référence aux dessins annexés, dans lesquels :
**Fig. 1**

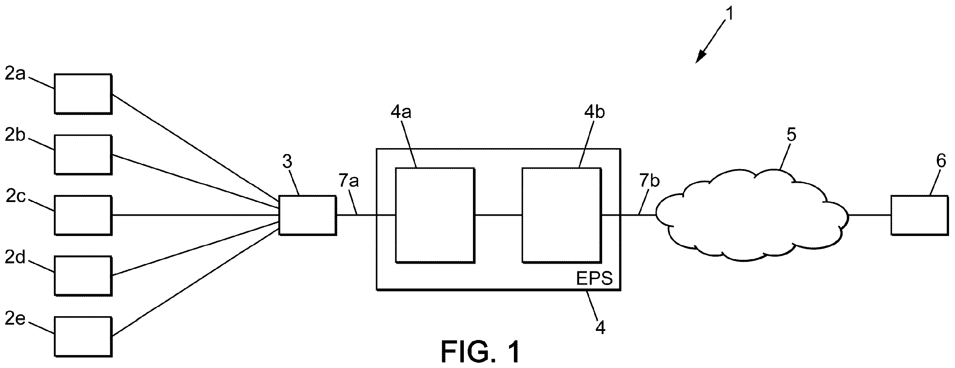

   [Fig. 1] est un schéma illustrant un exemple de système selon un ou plusieurs modes de réalisation ;
**Fig. 2a**

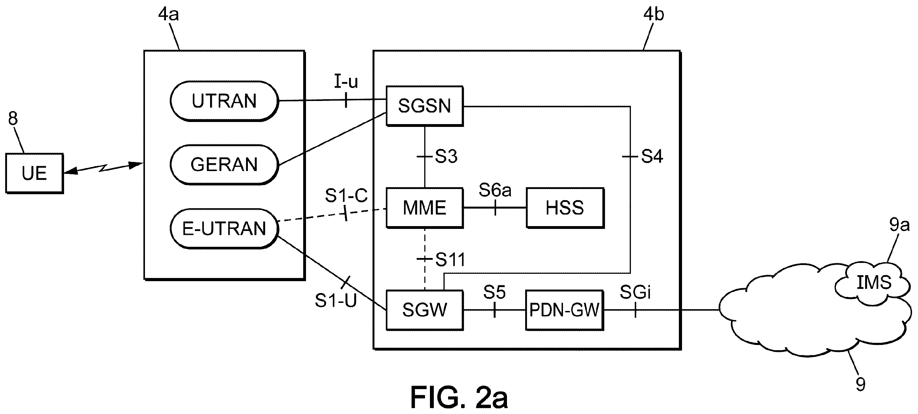

   [Fig. 2a] est un schéma illustrant un exemple d'architecture de réseau pour la mise en œuvre du procédé proposé selon un ou plusieurs modes de réalisation ;
**Fig. 2b**

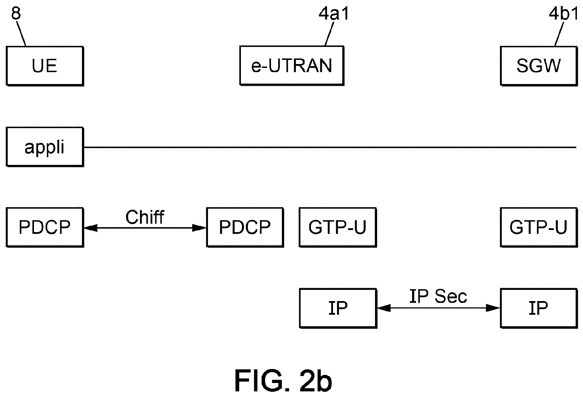

   [Fig. 2b] est un schéma illustrant un exemple de fonction de sécurité dans un réseau EPS pour la protection du plan utilisateur ;
**Fig. 2c**

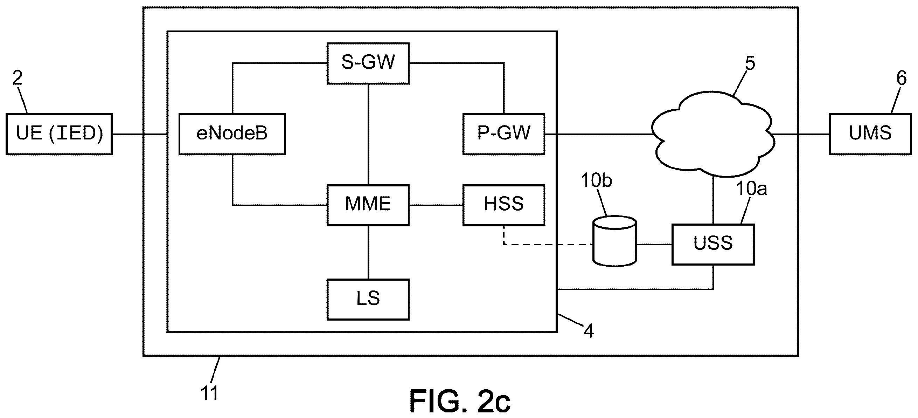

   [Fig. 2c] est un schéma illustrant un exemple illustre un exemple d'architecture de système pour la mise en œuvre du procédé proposé selon un ou plusieurs modes de réalisation;
**Fig. 3**

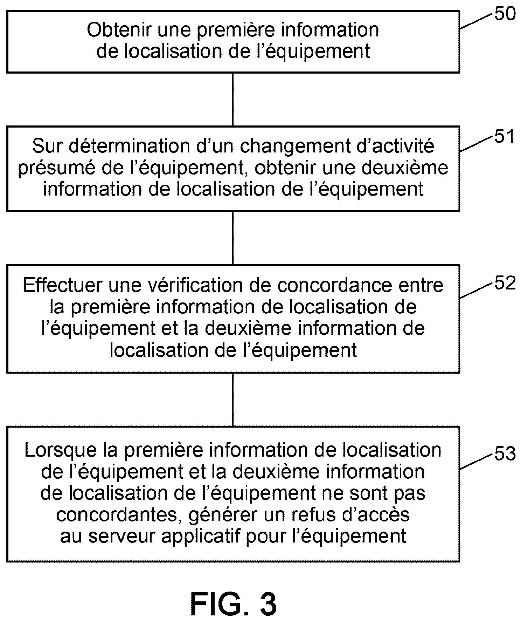

   [Fig. 3] est un diagramme illustrant un procédé selon un ou plusieurs modes de réalisation ;
**Fig. 4a**

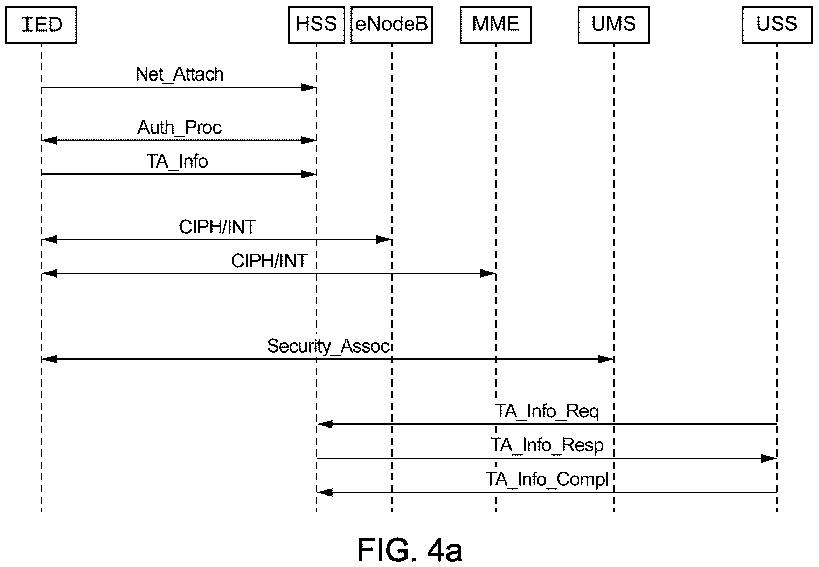

   [Fig. 4a] est un diagramme illustrant un exemple d'obtention d'une première information de localisation de l'équipement géré selon un ou plusieurs modes de réalisation ;
**Fig. 4b**

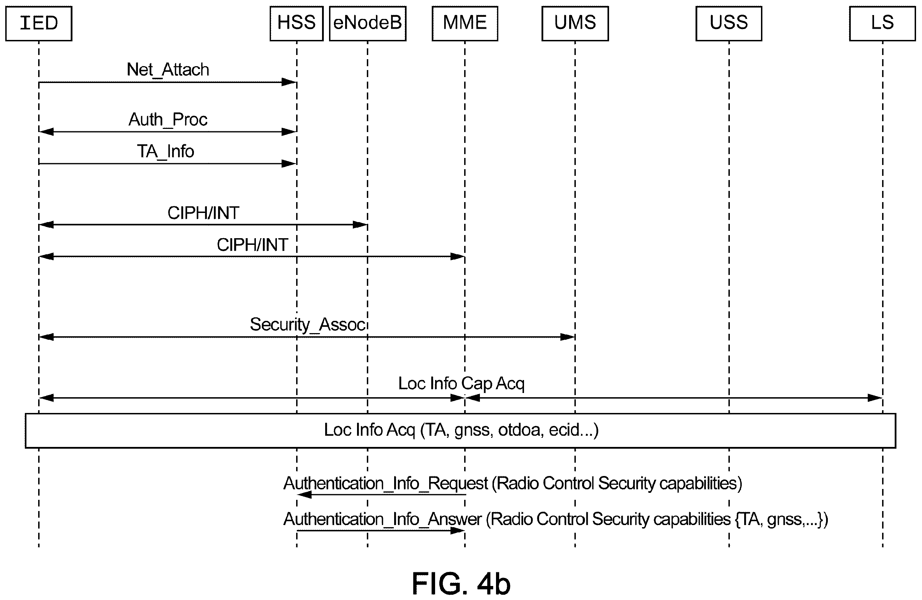

   [Fig. 4b] est un diagramme illustrant un exemple d'obtention d'une première information de localisation de l'équipement géré selon un ou plusieurs modes de réalisation ;
**Fig. 4c**

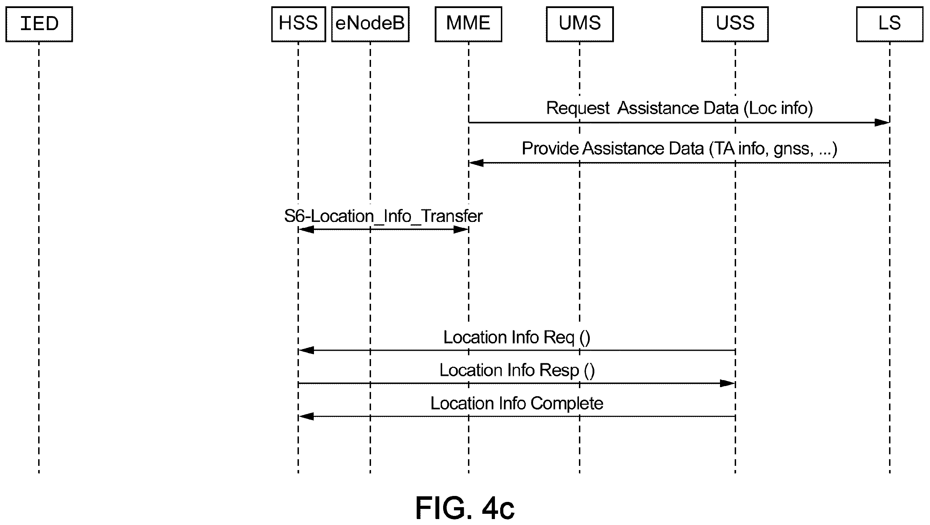

   [Fig. 4c] est un diagramme illustrant un exemple d'obtention d'une première information de localisation de l'équipement géré selon un ou plusieurs modes de réalisation ;
**Fig. 4d**

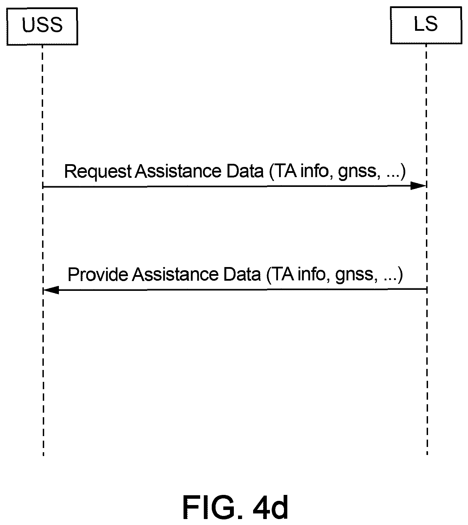

   [Fig. 4d] est un diagramme illustrant un exemple d'obtention d'une première information de localisation de l'équipement géré selon un ou plusieurs modes de réalisation ;
**Fig. 5a**

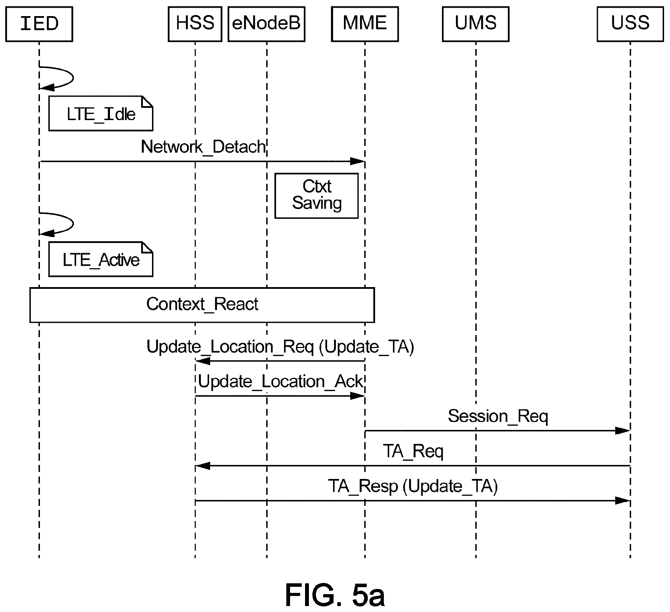

   [Fig. 5a] est un diagramme illustrant un exemple d'obtention d'une deuxième information de localisation de l'équipement géré selon un ou plusieurs modes de réalisation ;
**Fig. 5b**

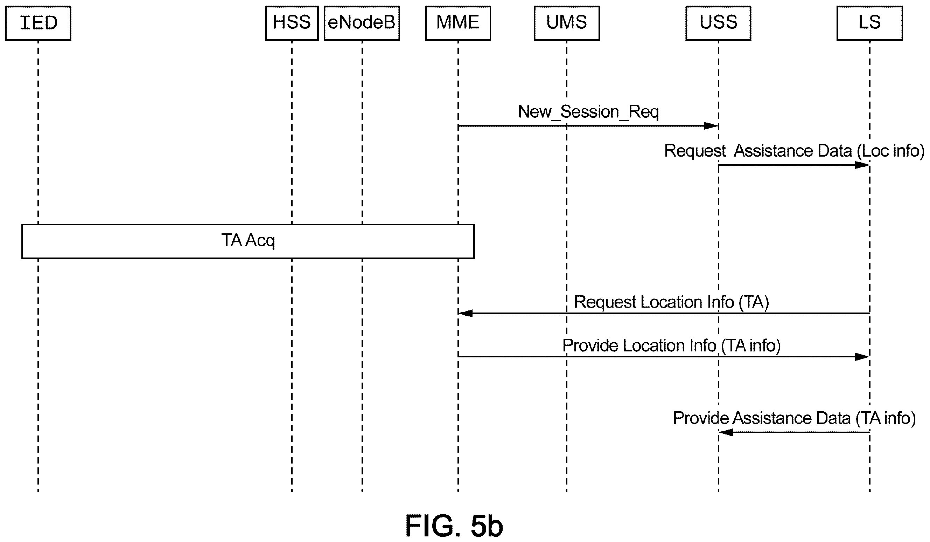

   [Fig. 5b] est un diagramme illustrant un exemple d'obtention d'une deuxième information de localisation de l'équipement géré selon un ou plusieurs modes de réalisation ;
**Fig. 5c**

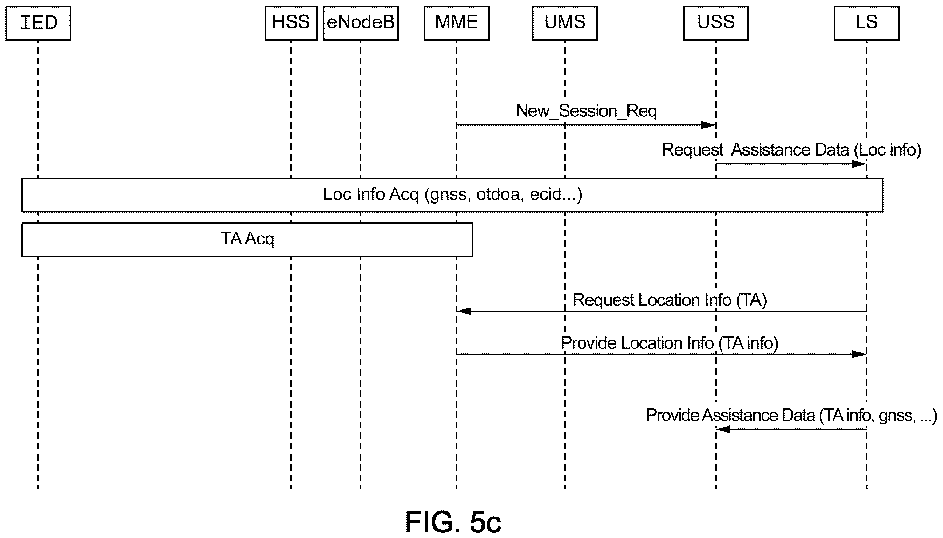

   [Fig. 5c] est un diagramme illustrant un exemple d'obtention d'une deuxième information de localisation de l'équipement géré selon un ou plusieurs modes de réalisation ;
**Fig. 6**

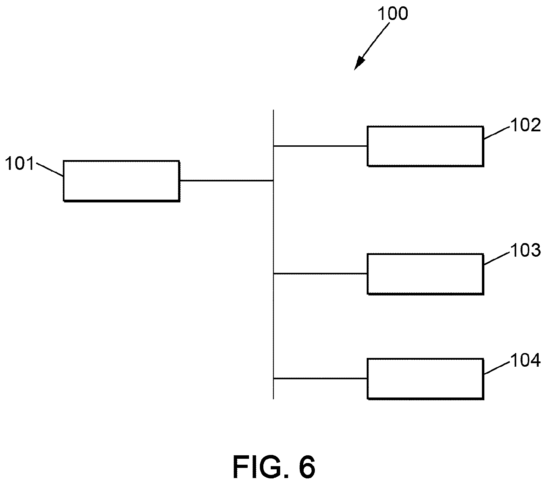

   [Fig. 6] est un diagramme illustrant un exemple d'architecture d'équipement pour la mise en œuvre du procédé proposé selon un ou plusieurs modes de réalisation.

### Description des modes de réalisation

Dans la description détaillée ci-après de modes de réalisation de l'invention, de nombreux détails spécifiques sont présentés pour apporter une compréhension plus complète. Néanmoins, l'homme du métier peut se rendre compte que des modes de réalisation peuvent être mis en pratique sans ces détails spécifiques. Dans d'autres cas, des caractéristiques bien connues ne sont pas décrites en détail pour éviter de compliquer inutilement la présente description.

La présente demande fait référence à des fonctions, moteurs, unités, modules, plateformes, et illustrations de diagrammes des méthodes et dispositifs selon un ou plusieurs modes de réalisation. Chacun des fonctions, moteurs, modules, plateformes, unités et diagrammes décrits peut être mis en œuvre sous forme matérielle, logicielle (y compris sous forme de logiciel embarqué («firmware»), ou de «middleware»), microcode, ou toute combinaison de ces derniers. Dans le cas d'une mise en œuvre sous forme logicielle, les fonctions, moteurs, unités, modules et/ou illustrations de diagrammes peuvent être mis en œuvre par des instructions de programme d'ordinateur ou du code logiciel, qui peut être stocké ou transmis sur un support lisible par ordinateur, incluant un support non transitoire, ou un support chargé en mémoire d'un ordinateur générique, spécifique, ou de tout autre appareil ou dispositif programmable de traitement de données pour produire une machine, de telle sorte que les instructions de programme d'ordinateur ou le code logiciel exécuté(es) sur l'ordinateur ou l'appareil ou dispositif programmable de traitement de données, constituent des moyens de mise en œuvre de ces fonctions.

Les modes de réalisation d'un support lisible par ordinateur incluent, de manière non exhaustive, des supports de stockage informatique et des supports de communication, y compris tout support facilitant le transfert d'un programme d'ordinateur d'un endroit vers un autre. Par «support(s) de stockage informatique», on entend tout support physique pouvant être accédé par ordinateur. Les exemples de support de stockage informatique incluent, de manière non limitative, les disques ou composants de mémoire flash ou tous autres dispositifs à mémoire flash (par exemple des clés USB, des clés de mémoire, des sticks mémoire, des disques-clés), des CD-ROM ou autres dispositifs de stockage optique de données, des DVD, des dispositifs de stockage de données à disque magnétique ou autres dispositifs de stockage magnétique de données, des composants de mémoire de données, des mémoires RAM, ROM, EEPROM, des cartes mémoires («smart cards»), des mémoires de type SSD («Solid State Drive»), et toute autre forme de support utilisable pour transporter ou stocker ou mémoriser des données ou structures de données qui peuvent être lues par un processeur d'ordinateur.

En outre, diverses formes de support lisible par ordinateur peuvent transmettre ou porter des instructions vers un ordinateur, telles qu'un routeur, une passerelle, un serveur, ou tout équipement de transmission de données, qu'il s'agisse de transmission filaire (par câble coaxial, fibre optique, fils téléphoniques, câble DSL, ou câble Ethernet), sans-fil (par infrarouge, radio, cellulaire, microondes), ou des équipements de transmission virtualisés (routeur virtuel, passerelle virtuelle, extrémité de tunnel virtuel, pare-feu virtuel). Les instructions peuvent, selon les modes de réalisation, comprendre du code de tout langage de programmation informatique ou élément de programme informatique, tel que, sans limitation, les langages assembleur, C, C++, Visual Basic, HyperText Markup Language (HTML), Extensible Markup Language (XML), HyperText Transfer Protocol (HTTP), Hypertext Preprocessor (PHP), SQL, MySQL, Java, JavaScript, JavaScript Object Notation (JSON), Python, et bash scripting.

De plus, les termes «notamment», «par exemple», «exemple», «typiquement» sont utilisés dans la présente description pour désigner des exemples ou illustrations de modes de réalisation non limitatifs, qui ne correspondent pas nécessairement à des modes de réalisation préférés ou avantageux par rapport à d'autres aspects ou modes de réalisation possibles.

Par «serveur» ou «plateforme», on entend dans la présente demande tout point de service (virtualisé ou non) ou dispositif opérant des traitements de données, une ou plusieurs bases de données, et/ou des fonctions de communication de données. Par exemple, et de manière non limitative, le terme «serveur» ou le terme «plateforme» peut faire référence à un processeur physique couplé de manière opérationnelle avec des fonctions de communication, de base de données et de stockage de données associées, ou faire référence à un réseau, un groupe, un ensemble ou un complexe de processeurs et des équipements de stockage de données et de mise en réseau associés, ainsi qu'un système d'exploitation et un ou plusieurs système(s) de base de données et des logiciels applicatifs en support des services et fonctions fournies par le serveur. Un dispositif informatique peut être configuré pour envoyer et recevoir des signaux, par réseau(x) de transmission sans-fil et/ou filaire, ou peut être configuré pour des traitements et/ou du stockage de données ou de signaux, et peut donc fonctionner en tant que serveur. Ainsi, des équipements configurés pour opérer en tant que serveur peuvent inclure, à titre d'exemples non limitatifs, des serveurs dédiés montés sur rack, des ordinateurs de bureau, des ordinateurs portables, des passerelles de service (parfois appelées «box» ou «passerelle résidentielle»), des décodeurs multimédia (parfois appelés «set-top boxes»), des équipements intégrés combinant diverses fonctionnalités, telles que deux ou plus des fonctionnalités mentionnées ci-dessus. Les serveurs peuvent fortement varier dans leur configuration ou leurs capacités, mais un serveur inclura généralement une ou plusieurs unité(s) centrale(s) de traitement et une mémoire. Un serveur peut aussi inclure un ou plusieurs équipement(s) de mémoire de masse, une ou plusieurs alimentation(s) électrique(s), une ou plusieurs interface(s) réseau sans-fil et/ou filaire(s), une ou plusieurs interface(s) d'entrée/sortie, un ou plusieurs système(s) d'exploitation, tel(s) que Windows Server, Mac OS X, Unix, Linux, FreeBSD, or un équivalent.

Les termes «réseau» et «réseau de communication» tels qu'utilisés dans la présente demande font référence à une ou plusieurs liaisons de données qui peuvent coupler ou connecter des équipements, éventuellement virtualisés, de manière à permettre le transport de données électroniques entre des systèmes informatiques et/ou des modules et/ou d'autres dispositifs ou équipements électroniques, tel qu'entre un serveur et un dispositif client ou d'autres types de dispositifs, y compris entre dispositifs sans fil couplés ou connectés par un réseau sans fil, par exemple. Un réseau peut aussi inclure une mémoire de masse pour stocker des données, tel qu'un NAS (en anglais «network attached storage», un SAN (en anglais «storage area network»), ou toute autre forme de support lisible par un ordinateur ou par une machine, par exemple. Un réseau peut comprendre, en tout ou partie, le réseau Internet, un ou plusieurs réseaux locaux (en anglais «local area networks», ou LANs), un ou plusieurs réseaux de type WAN (en anglais «wide area networks»), des connexions de type filaire, des connexions de type sans fil, de type cellulaire, ou toute combinaison de ces différents réseaux. De manière similaire, des sous-réseaux peuvent utiliser différentes architectures ou être conformes ou compatibles avec différents protocoles, et inter-opérer avec des réseaux de plus grande taille. Différents types d'équipements peuvent être utilisés pour rendre interopérables différentes architectures ou différents protocoles. Par exemple, un routeur peut être utilisé pour fournir une liaison de communication ou une liaison de données entre deux LANs qui seraient autrement séparés et indépendants.

Les termes «couplé de manière opérationnelle», «couplé», «monté», «connecté» et leurs variantes et formes diverses utilisés dans les présentes font référence à des couplages, connexions, montages, qui peuvent être directs ou indirects, et comprennent notamment des connexions entre équipements électroniques ou entre des portions de tels équipements qui permettent des opérations et fonctionnements tels que décrits dans la présente demande. De plus, les termes «connectés» et «couplés» ne sont pas limités à des connections ou des couplages physiques ou mécaniques. Par exemple, un couplage de manière opérationnelle peut inclure une ou plusieurs connexion(s) filaire(s) et/ou une ou plusieurs connexion(s) sans-fil entre deux équipements ou plus qui permettent des liaisons de communication simplex et/ou duplex entre les équipements ou des portions des équipements. Selon un autre exemple, un couplage opérationnel ou une connexion peut inclure un couplage par liaison filaire et/ou sans-fil pour permettre des communications de données entre un serveur du système proposé et un autre équipement du système.

Les termes « équipement géré » font référence à un équipement d'un système de communication de données auquel le procédé proposé est appliqué pour la gestion de sécurité de l'équipement.

Les procédés et systèmes proposés visent à sécuriser les échanges de données entre un équipement (par exemple de type IED) et un serveur (par exemple un centre de contrôle de réseau) connectés par des premier et deuxième réseau de communication de données utilisant différentes fonctions de sécurité pour l'authentification des requêtes d'accès au réseau (par exemple un réseau de communication sans fil (réseau cellulaire de type 3GPP) connecté à un réseau de communications de données de type PDN (réseau Internet par exemple)). Les procédés et systèmes proposés concernent de manière générale la gestion de sécurité dans un système de communication de données pour l'échange de données entre un équipement et un serveur applicatif du système, le système comprenant un premier réseau de communication de données, couplé de manière opérationnelle à un deuxième réseau de communication de données. Ils peuvent en particulier, mais de manière non limitative, avantageusement être utilisés pour la gestion de sécurité d'équipements de type IED connectés à un serveur applicatif d'un système dans le contexte de la sécurisation des réseaux utilisés par des « utility companies », en particulier des réseaux électriques intelligents. En fonction du mode de réalisation choisi, différents types ou architectures d'équipements pourront être envisagés pour la mise en œuvre des procédés de gestion de sécurité proposés. Ainsi, dans un ou plusieurs modes de réalisation, un équipement configuré pour la mise en œuvre des procédés et systèmes proposés pourra être un équipement installé chez l'utilisateur final, comme par exemple un compteur électrique intelligent dans le cas d'un équipement IED, ou un équipement de surveillance de réseau et/ou de mesure d'un équipement de réseau, par exemple de réseau électrique intelligent. Dans d'autres modes de réalisation, l'équipement IED configuré pour la mise en œuvre des procédés et systèmes proposés pourra être un équipement de type concentrateur, auquel sont connectés des équipements installés chez des utilisateurs finaux respectifs, comme par exemple un concentrateur auquel sont connectés des compteurs électriques intelligents. Dans un ou plusieurs modes de réalisation, différents types ou architectures d'équipements IED pourront être utilisés au sein d'un même système tel que proposé pour la mise en œuvre des procédés de gestion de sécurité proposés.

La figure 1 illustre un exemple de système (1) comprenant un ensemble d'équipements terminaux (2a, 2b, 2c, 2d, 2e) connectés, par le biais d'un équipement concentrateur (3), à un réseau (4) de télécommunications de type EPS (de l'anglais « Evolved Packet System »), par exemple de type 4G ou 5G, connecté à un réseau (5) de communication de données, comme par exemple un réseau IP (de l'anglais « Internet Protocol »), auquel un serveur (6) est connecté pour la communication de données avec les équipements terminaux (2a, 2b, 2c, 2d, 2e) et/ou avec le concentrateur (3).

Le réseau EPS (4) comprendra typiquement un réseau d'accès (4a) et un réseau cœur (4b) interconnectés, l'équipement concentrateur (3) étant connecté au réseau d'accès (4a) par un lien de communication de données (7a) comprenant un lien radio et le réseau (5) de communication de données étant connecté au réseau cœur (4b) par un lien de communication de données (7b).

L'homme du métier comprendra que les procédés et systèmes proposés ne sont pas limités à un ou plusieurs types particuliers de lien(s) de communication, que ce soit pour la communication de données entre un nœud concentrateur (3) et un réseau EPS (4), pour la communication de données entre un réseau EPS (4) et un réseau de communication de données (5), ou pour la communication de données entre le réseau de communication de données (5) et un serveur (6). De même, les procédés et systèmes proposés ne sont pas limités à un ou plusieurs types particuliers et/ou architecture(s) de réseau, qu'il s'agisse du réseau EPS (4) ou du réseau de communication de données (5). Ainsi, en fonction du mode de réalisation choisi, les procédés et systèmes proposés pourront être mis en œuvre avec un réseau EPS ou une combinaison de plusieurs types de réseaux EPS, comme par exemple un réseau EPS 4G, un réseau EPS 5G, ou une combinaison de réseaux utilisant un réseau EPS 4G et/ou un réseau EPS 5G. De même, en fonction du mode de réalisation choisi, les procédés et systèmes proposés pourront être mis en œuvre avec un réseau de communication de données par paquets (en anglais, « Packet Data Network », ou « PDN »), comme par exemple, un ou plusieurs réseaux IP interconnectés, dont par exemple le réseau Internet, ou une combinaison de plusieurs types de réseaux de communication de données comprenant un réseau de communication de données par paquets.

En fonction du mode de réalisation, le lien de communication entre un équipement terminal (2a, 2b, 2c, 2d, 2e) et le concentrateur (3) pourra comprendre un ou plusieurs types de liens de communications, comme par exemple un lien de communication radio, un lien de communication filaire et/ou un lien de communication optique (par exemple une ou plusieurs fibres optiques). Chaque lien de communication pourra être opéré selon un ou plusieurs protocoles de communication de données correspondant au type de lien. Par exemple, dans un ou plusieurs modes de réalisation, le lien de communication entre un équipement terminal (2a, 2b, 2c, 2d, 2e) et le concentrateur (3) pourra comprendre un lien de communication radio pour la communication de données dans un réseau de type WiFi (de l'anglais « Wireless Fidelity »), fonctionnant selon un ou plusieurs standard IEEE 802.11, et/ou un lien de communication de données par courant porteur en ligne, par exemple de type CPL G3 (courant porteur en ligne de 3^{ème} génération). Ainsi, les procédés et systèmes proposés ne sont pas limités à un type ou une architecture de réseau(x) ou à un type de lien(s) de communication pour la communication de données entre un équipement terminal (2a, 2b, 2c, 2d, 2e) et un nœud concentrateur (3) connecté à un réseau EPS (4).

En fonction du mode de réalisation choisi, le procédé proposé pourra être mis en œuvre pour l'authentification d'un équipement géré qui pourra, selon les cas, être un équipement concentrateur du type de celui (3) illustré sur la figure 1, et/ou un équipement terminal (2a, 2b, 2c, 2d, 2e) (par exemple un équipement IED) connecté à un réseau EPS éventuellement par le biais d'un concentrateur (3), comme illustré sur la figure 1. En fonction du mode de réalisation, un équipement géré par le procédé proposé pourra être un équipement terminal, tel qu'un équipement indépendant placé dans un bâtiment (par ex. une habitation), comme par exemple un compteur électrique comptant une quantité de flux ou de sous-flux électrique, un équipement de surveillance ou de mesure de réseau électrique intelligent placé par exemple à proximité d'un équipement du réseau tel qu'un disjoncteur par exemple, un équipement de mesure de la qualité du courant placé par exemple directement sur une ligne de transmission, ou un équipement d'un ensemble plus important, logé dans un poste source par exemple, dans un quartier d'habitation ou en zone rurale ou semi-rurale, et permettant de piloter des appareils électriques de mesure ou de sécurité tels que des interrupteurs ou des disjoncteurs. Un équipement terminal pourra par exemple être un équipement de type IED.

Le procédé proposé tire avantage de l'utilisation de fonctions de localisation prévues dans les réseaux de communication mobile de type 3GPP (comprenant un réseau d'accès et un réseau cœur) pour localiser les équipements utilisateurs (en anglais, « user equipment », ou « UE ») de ces réseaux, mais n'est cependant pas limité aux réseaux de communication mobile de type 3GPP ou à des fonctions de localisation particulières prévues dans différents types de réseaux de communication de données.

La figure 2a illustre un exemple d'architecture de réseau pour la mise en œuvre du procédé proposé selon un ou plusieurs modes de réalisation.

En référence à la figure 2a, un réseau EPS (4) comprend un réseau d'accès (4a) connecté à un réseau cœur (4b). Dans un ou plusieurs modes de réalisation, le réseau d'accès peut comprendre un ou plusieurs réseau d'accès radio 4G et/ou 4G+, incluant par exemple un réseau d'accès radio de type LTE (EUTRAN, pour « Evolved UMTS Terrestrial Radio Access Network »), un ou plusieurs réseau d'accès radio 3G et/ou 3G+, incluant par exemple un réseau d'accès radio de type UMTS (UTRAN, pour « UMTS Terrestrial Radio Access Network »), un ou plusieurs réseaux d'accès radio 2G, incluant par exemple un réseau d'accès radio de type GSM (pour « Global System for Mobile communications), GPRS (pour « General Packet Radio Service ») et/ou EDGE (pour « Enhanced Data Rates for Global Evolution ») (tel qu'un réseau GERAN, pour « GSM EDGE Radio Access Network »), ou une combinaison de ces différents types de réseau d'accès radio. Chaque réseau d'accès radio comprend typiquement une ou plusieurs stations de base (non représentées sur la figure) connectées au nœud du réseau cœur connecté à leur réseau d'accès (par exemple UTRAN, GERAN ou E-UTRAN), éventuellement par l'intermédiaire d'un ou plusieurs nœuds contrôleurs de station de base (par exemple de type « Radio Network Controller », RNC) pour le réseau d'accès radio 3G/3G+ UTRAN.

Dans un ou plusieurs modes de réalisation, le réseau cœur (4b) peut être du type EPC (pour « Evolved Packet Core »), et être connecté à un ou plusieurs réseaux d'accès d'une part, et à un ou plusieurs réseaux de communication de données extérieurs (9), qui peuvent éventuellement comprendre un ou plusieurs réseaux IMS (pour « IP Multimedia Subsystem ») (9a) de fourniture de services IP par l'opérateur du réseau cœur (4b), d'autre part. Un ou plusieurs équipements utilisateur (UE) (8), comme par exemple le concentrateur (3) et/ou un ou plusieurs des équipements terminaux (2a, 2b, 2c, 2d, 2e) de la figure 1, sont configurés pour des communications de données par voie radio via un ou plusieurs des réseaux d'accès radio (4a).

Le réseau cœur EPC (4b) peut comprendre les entités fonctionnelles suivantes : une fonction de gestion de la mobilité des équipements utilisateur dans le réseau EPS (MME, pour « Mobility Management Entity »), une fonction de passerelle de service de réseau cœur 2G/3G (SGSN, pour « Serving gateway Support Node »), une fonction de passerelle de service LTE (SGW, pour « Serving GateWay »), une fonction de passerelle vers les réseaux extérieurs (PDN-GW, pour « Packet Data Network »), et une fonction base de données d'utilisateurs et d'abonnés (HSS, pour « Home Subscriber Server »), qui peut être mise en œuvre au sein d'un serveur de gestion d'abonnés. Différentes architectures peuvent être envisagées pour ces entités fonctionnelles, de sorte que, par exemple, les fonctions MME et SGW peuvent être mises en œuvre dans un ou plusieurs modes de réalisation au sein d'un même nœud MME/SGW du réseau cœur EPC (4b).

L'interface entre l'UTRAN et le SGSN peut être de type Iu spécifié par le 3GPP, l'interface entre le SGSN et la fonction MME peut être de type S3 spécifié par le 3GPP, l'interface pour le plan utilisateur (trafic de données) entre le SGW et l'E-UTRAN peut être de type S1-U spécifié par le 3GPP, l'interface pour le plan de contrôle (trafic de signalisation) entre la fonction MME et l'E-UTRAN peut être de type S1-C spécifié par le 3GPP, l'interface entre la fonction MME et la fonction HSS peut être de type S6a spécifié par le 3GPP, l'interface entre le SGSN et le SGW peut être de type S4 spécifié par le 3GPP, l'interface entre le SGW et le PDN-GW peut être de type S5 spécifié par le 3GPP, l'interface pour le plan de contrôle entre la fonction MME et le SGW peut être de type S11 spécifié par le 3GPP, et l'interface entre le PDN-GW et les réseaux extérieurs peut être de type SGi spécifié par le 3GPP.

Ainsi, dans un ou plusieurs modes de réalisation, un réseau d'accès radio 4G et/ou 4G+ du réseau d'accès (4a) incluant un E-UTRAN pourra par exemple comprendre une ou plusieurs stations de base 4G et/ou 4G+ de type « eNodeB » configurées pour des communications de données avec une entité fonctionnelle MME du réseau cœur (4b) pour le plan de contrôle (trafic de signalisation) par le biais d'une interface de type S1-C, et avec une entité fonctionnelle SGW du réseau cœur (4b) pour le plan utilisateur (trafic de données) par le biais d'une interface de type S1-U.

Dans le plan utilisateur (trafic de données), les données utilisateur transmises par le réseau d'accès E-UTRAN rencontrent donc la passerelle SGW avant d'être dirigées vers le PDN-GW puis vers les réseaux extérieurs (9).

On pourra se reporter aux spécifications techniques du 3GPP pour une description détaillée de ces entités fonctionnelles, de ces interfaces, et des protocoles qui peuvent être utilisés pour leur mise en œuvre. L'homme du métier comprendra toutefois que les procédés, systèmes et dispositifs proposés dans la présente description ne sont pas limités à un type particulier de réseau d'accès (par exemple à un type particulier de réseau d'accès 3GPP ou à une génération particulière de réseau 3GPP), ou à un type particulier de réseau PDN (ou un type particulier de réseau IP), mais peuvent être mis en œuvre avec tout type de réseau d'accès utilisant une première fonction de sécurité, notamment pour l'accès au réseau, et tout type de réseau de communication de données utilisant une deuxième fonction de sécurité, notamment pour l'accès au réseau. En particulier, dans un ou plusieurs modes de réalisation, le réseau d'accès pourra être de type WiFi configuré en mode réseau « ad-hoc », ce qui présente l'avantage de bénéficier d'une authentification de type EAP (de l'anglais « Extensible Authentication Protocol »), selon la spécification technique RFC4187. Les mécanismes d'authentification initiaux du 3GPP (appelés « AKA », pour « Authentification and Key Agreement ») ont en effet été adaptés pour les rendre compatibles avec l'ensemble des normes IEEE 802.11 relatives aux réseaux sans fil locaux (WiFi), ce qui a conduit à la spécification de l'authentification EAP-AKA, une méthode d'authentification EAP utilisables par des terminaux utilisateurs de réseaux sans-fil (comme par exemple les réseaux 3G UMTS et CDMA2000 et 4G comme LTE). La méthode d'authentification EAP-AKA permet notamment à des équipements dotés d'un module SIM de s'authentifier sur les liaisons IEEE-802 non pas avec un simple mot de passe, mais avec les éléments de sécurité du module SIM dont ils sont dotés. Sa mise en œuvre implique en général que le point d'accès radio soit connecté à un serveur Radius (de l'anglais « Remote Authentification Dial-In User Service ») qui a lui-même accès au HSS.

La figure 2b illustre un exemple de fonction de sécurité dans un réseau EPS pour la protection du plan utilisateur.

En référence à la figure 2b, des données utilisateurs sont transmises entre un équipement utilisateur (8) et une passerelle SGW (4b1) d'un réseau cœur EPC par l'intermédiaire d'un réseau d'accès radio de type E-UTRAN (4a1). La figure 2b illustre en outre des exemples de piles de protocoles (selon une architecture en couches protocolaires) qui peuvent être utilisés par l'UE (8), les nœuds du réseau E-UTRAN (4a1) (typiquement du type station de base, ou « eNB »), et la passerelle SGW (4b1). Les données sont transmises par la couche applicative « app », qui n'existe dans l'illustration de la figure 2b qu'au sein de l'équipement utilisateur, à une couche inférieure d'un protocole de mise en forme des paquets, dans l'exemple illustré le protocole PDCP. Les couches protocolaires inférieures au niveau transport ne sont par ailleurs pas représentées sur la figure 2b.

Comme illustré sur la figure 2b, une première fonction de sécurité est utilisée pour sécuriser les communications de données sur l'interface air entre l'entité PDCP de l'UE (8) et l'entité correspondante du nœud de l'E-UTRAN (4a1) avec lequel l'UE (8) échange des données sur l'interface air. Une deuxième fonction de sécurité (dite « fonction de sécurité IP ») est utilisée pour sécuriser la connexion IP entre la couche IP mise en œuvre par un nœud de l'E-UTRAN (4a1) et la couche IP mise en œuvre par le SGW (4b1) pour les communications de données de la couche applicative « appli » de l'UE (8). Cette fonction de sécurité IP est mise en œuvre en utilisant le protocole IPsec (de l'anglais « Internet Protocol Security »), décrit dans la spécification RFC 2401, qui permet, en fonctionnement dans un mode d'encapsulation des paquets IP appelé « tunneling », d'établir une communication sécurisée entre des entités en créant des tunnels entre ces entités.

Les couches protocolaires de niveau 1 et 2 du modèle OSI (de l'anglais « Open Systems Interconnection »), non représentées sur la figure 2b, peuvent aussi utiliser une fonction de sécurité

On peut donc typiquement trouver trois niveaux de sécurisation des communications de données pour la protection du plan utilisateur entre un équipement utilisateur (8) et un SGW (4b1) d'un réseau cœur EPC, par exemple par le biais d'une authentification, d'un chiffrement et/ou d'une vérification d'intégrité sur chacun de ces trois niveaux. En référence à la figure 1, les communications entre un équipement IED et un serveur applicatif (6) utilisant un réseau EPS (4) peuvent utiliser ces trois niveaux de sécurisation des communications, pour le tronçon de communication de données entre l'équipement IED et le réseau EPS (4) utilisé.

Les fonctions de sécurité utilisées dans un réseau EPS sont typiquement, pour l'essentiel, basées sur les mécanismes à clés secrètes connues par la fonction HSS du réseau EPS. C'est le domaine de la cryptographie symétrique, aussi dite « à clé secrète ». La cryptographie symétrique utilise une même clé pour le chiffrement et le déchiffrement de messages à protéger. La sécurité de l'échange de messages ou de données est assurée par le fait que seuls l'expéditeur et le destinataire connaissent la clé, qui est donc secrète. Ce type de cryptographie a le mérite d'avoir été reconduit dans les réseaux de télécommunication sans fil, et notamment les réseaux 3GPP, de génération technologique en génération technologique, et permet de bénéficier d'un grand nombre de fonctions de sécurité normalisées. Ainsi, la dotation d'un module SIM (de l'anglais « Subscriber Identity Module ») (par exemple sous la forme d'une carte SIM ou d'un module eSIM) à un équipement permet la mise en œuvre des fonctions prévues par les standards 3GPP, en particulier celles de cyber-sécurité qui incluent l'authentification, l'attachement au réseau (en anglais « Network attachement ») et le chiffrage intégrité. Le chiffrement ayant lieu très tôt dans l'établissement des protocoles, même la lecture malicieuse d'identifiants est ainsi rendue compliquée.

A nouveau en référence à la figure 1, il est en outre envisagé que, dans un ou plusieurs modes de réalisation, l'équipement géré (2a-2e et/ou 3) échange des données avec un serveur applicatif au travers d'un réseau de type EPS (4) et d'un réseau de communication de paquets (9), comme par exemple un réseau IP, dans le cadre d'une ou plusieurs applications de fourniture de service. L'accès à de telles applications pourra typiquement être sécurisé par des fonctions de sécurité, par exemple utilisant des mécanismes de cryptographie asymétrique et des protocoles de sécurisation des communications de données sur le réseau Internet, tels que, par exemple, les protocoles SSL (de l'anglais « Secure Socket Layer ») et/ou TLS (de l'anglais « Transport Layer Security »).

Dans un ou plusieurs modes de réalisation, les communications de données dans le réseau IP pourront être sécurisées par un mécanisme de chiffrement à clé publique et privée, utilisé par exemple pour le chiffrement des données transitant sur le réseau et/ou pour l'authentification d'un utilisateur. Le chiffrement de données pourra être effectué en utilisant la clé publique du destinataire, le destinataire utilisant sa clé privée pour le déchiffrement des données. L'authentification d'un expéditeur de données pourra être effectuée par chiffrement de données par l'expéditeur en utilisant sa clé privée, le destinataire utilisant la clé privée de l'expéditeur pour le déchiffrement des données.

Dans un ou plusieurs modes de réalisation, la sécurisation des échanges de données par cryptographie asymétrique pourra utiliser des certificats numériques qui contiennent la clé publique de l'entité associée au certificat pour chiffrer ou authentifier des liens de communication sans partage préalable d'une clé commune. Une infrastructure à clés publiques (en anglais, « Public Key Infrastructure » ou « PKI ») pourra être utilisée pour gérer l'authentification et la signature numérique d'une ou plusieurs entités fonctionnelles ou d'un ou plusieurs équipements du réseau.

Dans un ou plusieurs modes de réalisation, une ou plusieurs applications de type Web ou IP, déployées par des entreprises de fourniture de service opérant un réseau comprenant un ou plusieurs réseaux de communication de données par paquets de type réseaux IP, pourront être exécutées en mode client-serveur dans l'équipement géré. Avantageusement, des applications de traitement de données (en anglais, « data analytics »), des applications de supervision (par exemple maintenance, téléchargement, etc.), et/ou des applications commerciales (par exemple de type « blockchain ») pourront par exemple être mises en œuvre au sein d'un ou de plusieurs serveurs applicatifs configurés pour effectuer des mesures ou des calculs localement afin d'éviter de surcharger les réseaux en termes de remontée d'information.

Dans un ou plusieurs modes de réalisation, la mise en œuvre sécurisée de ces applications par un opérateur de service pourra reposer dans le monde Internet sur une infrastructure de gestion des clés de type PKI configurée pour gérer les clés publiques qu'il distribue aux équipements, généralement sous la forme de certificats. Gérer ou « manager » signifie ici déployer des procédures permettant de générer, allouer, stocker, détruire, changer, révoquer les clés publiques permettant de procéder la mise œuvre des fonctions d'authentification, chiffrage et intégrité au niveau applicatif par des mécanismes à clés publiques, tels que, par exemple, les mécanismes de gestion des certificats X509. Par exemple, un opérateur de service, mettant par exemple en œuvre des fonctions de pilotage « métier » de son réseau (par exemple un réseau de distribution d'énergie) pourra être propriétaire d'une infrastructure de réseau de type EPS ou équivalent (comme par exemple tout réseau conforme aux normes spécifiées par l'organisation 3GPP, en particulier sur le segment réseau d'accès et jusqu'à la passerelle d'accès (par exemple un SGW) au réseau Internet ou plus généralement à un réseau PDN (par exemple un réseau IP)). Plusieurs cas de figure sont envisageables à cet égard : par exemple, l'opérateur pourra utiliser le réseau IP, avec ce qu'il obtiendra de garanties en termes de latence, bande passante (régie par la qualité de service de l'Internet) mais aussi de redondance. L'opérateur pourra aussi utiliser, le cas échéant, son centre de contrôle (SCADA, de l'anglais « Supervisory control and data acquisition ») de réseau à fibres optiques et/ou des lignes qui lui seront propres.

Ainsi, les spécifications 3GPP définissent des protocoles de sécurité solides qu'il est difficile de tromper. Néanmoins, les principes retenus pour la norme pour le mode M2M (de l'anglais « Machine-to-Machine ») conduisent à une utilisation dans ce contexte du mécanisme complet d'authentification qui peut être peu fréquent, voire rare. En effet, l'équipement géré peut rester pendant une durée allant, selon les cas, de plusieurs heures, jours, mois ou années, en mode connecté (mode dit « LTE-Idle » dans les spécifications 4G), et ne passer qu'occasionnellement en mode actif pour transmettre des données telles que des mesures ou des alertes, et ainsi déclencher la mise en œuvre des principes d'authentification prévus par le système.

En mode LTE-Idle, le(s) module(s) d'émission/réception radiofréquence d'un équipement géré (correspondant à un UE dans le contexte 3GPP) sont inactifs, et la connexion RRC (« Remote Radio Control ») de l'équipement n'est pas établie. Par contre, le lien de type porteuse EPS (en anglais, « EPS bearer ») entre la fonction MME et l'UE est préservé. En référence à la Figure 1, sur la partie réseau EPS (4) (en particulier le réseau cœur EPC (4b)), les contextes établis initialement, ainsi que les associations de sécurité (telles que des associations de clé) réalisées en début de communication sont valables pendant un long moment, et ne sont pas souvent rafraîchis. Les associations de sécurité sur cette partie peuvent néanmoins être considérées comme suffisamment solides pour que le non-rafraichissement pendant une période de temps qui peut être importante ne soit pas problématique, étant donné qu'il sera difficile à une tentative malveillante d'infiltration du système entre deux rafraichissements de prospérer.

Cependant, sur la partie réseau (5) de communication de données, les secrets de connexion sur le serveur (6) sont plus fragiles, notamment car ils reposent dans certains cas sur des mots de passe, et/ou sur des certificats dont la solidité n'est pas très élevée. Un système malveillant peut donc tenter de se faire passer pour un équipement radio du point de vue du réseau (5) de communication de données, ce qui nécessitera d'acquérir une faible connaissance de secrets (mots de passer et/ou certificats), en attaquant directement les couches hautes (comme par exemple la couche applicative) du réseau (5) pour se connecter au serveur (6). Le risque associé à ce type d'attaque de sécurité est favorisé par la structure en couches indépendantes (par exemple de type OSI) utilisés dans les réseaux de télécommunications, et en particulier dans les réseaux de communication de données.

Ce risque pose une difficulté d'autant plus grande que le temps passé entre deux rafraichissements d'authentification est long, un attaquant ayant le temps de se substituer à l'équipement géré et au réseau en mode brut-force entre deux authentifications de l'équipement géré.

La figure 2c illustre un exemple d'architecture de système pour la mise en œuvre du procédé proposé selon un ou plusieurs modes de réalisation.

En référence à la figure 2c, un noeud IED (2) est connecté à un réseau de télécommunications de type EPS (4) interconnecté à un réseau de communication de données (5). L'ensemble réseau de télécommunications de type EPS (4) interconnecté à un réseau de communication de données (5) peut correspondre, dans un ou plusieurs modes de réalisation, à un réseau (11) opéré par une entreprise de fourniture de service, qui peut par exemple, selon les cas de figure, être propriétaire ou locataire des infrastructures du réseau. L'opérateur de réseau peut fournir aux abonnés de son service un équipement IED de type celui illustré sur la figure, configuré pour effectuer des communications de données avec un serveur applicatif (6) (UMS, pour « Utility Mission Server ») (par exemple un serveur applicatif métier de pilotage du réseau de distribution électrique) connecté au réseau (11) sécurisées, par exemple dans le cadre de la fourniture de service par l'entreprise à ses clients ou dans le cadre de la gestion par l'entreprise des équipements de son réseau (11).

Le procédé proposé peut être mis en œuvre, dans un ou plusieurs modes de réalisation, par une unité de gestion de sécurité, qui pourra elle-même être mise en oeuvre au sein d'un nœud (10a) du réseau (11), appelé « serveur Smartgrid », « Smartgrid GW » ou « Utility Security Server » (USS).

Dans un ou plusieurs modes de réalisation, le nœud Utility Security Server (10a) peut être connecté au réseau de communication de données (5), et l'unité de gestion de sécurité selon le procédé proposé configurée pour communiquer avec une fonction de sécurité (par exemple une infrastructure de gestion de clés « PKI-E », non représentée sur la figure) utilisée pour sécuriser les communications de données du réseau de communication de données (5). Ce lien de communication pourra avantageusement être lui-même sécurisé.

Dans un ou plusieurs modes de réalisation, le noeud Utility Security Server (10a) peut en outre être connecté au réseau de télécommunications de type EPS (4), par exemple au premier serveur du réseau EPS (4) rencontré par le trafic, par exemple par un tunnel sécurisé. Par exemple, en référence à la figure 2a, le noeud Utility Security Server (10a) pourra être connecté à un nœud passerelle du réseau de télécommunications de type EPS (4) (S-GW et/ou P-GW) dans un ou plusieurs modes de réalisation.

De plus, le nœud Utility Security Server (10a) peut comprendre, ou, en fonction du mode de réalisation, être connecté de manière opérationnelle à, une unité fonctionnelle configurée pour mettre en œuvre un serveur de localisation de UE (en anglais « Location Server ») tel que défini par la spécification technique 3GPP TS 37.355, par exemple par le biais d'un lien de communication de données entre le nœud USS (10a) et le réseau de télécommunications de type EPS (4), et/ou d'un lien de communication de données entre le nœud USS (10a) et le réseau (5) de communication de données, comme illustré sur la figure 2c.

Le noeud Utility Security Server (10a) pourra ainsi être configuré, dans un ou plusieurs modes de réalisation, pour fournir une fonction de gestion de sécurité pour l'accès au serveur applicatif (6) selon le procédé proposé. Dans un ou plusieurs modes de réalisation, le noeud Utility Security Server (10a) pourra en outre être configuré pour assurer une fonction de gestion de l'authentification selon le procédé proposé mise en œuvre au sein d'une unité de gestion de sécurité, et pour ce faire être connecté au réseau de communications de données (5) et/ou au réseau d'accès (4).

Dans un ou plusieurs modes de réalisation, le noeud « Utility Security Server » (10a) et la fonction HSS du réseau EPS (4) pourront être configurés pour communiquer avec une base de données (10b), dite de concordance de localisation (ou en anglais, « location consistency») configurée avec des appairages d'identifiants correspondants au nœud IED (2) avec des données de localisation correspondantes, éventuellement par le biais d'un serveur dédié, comme par exemple le serveur de localisation discuté ci-dessus. Par exemple, le noeud « Utility Security Server » (10a) et la fonction HSS du réseau EPS (4) pourront être configurés pour se connecter à la base de données de concordance de localisation (10b), interroger cette base et/ou recevoir des données consignées dans cette base de données.

En référence à la figure 2c, le système proposé peut ainsi comprendre, dans un ou plusieurs modes de réalisation, une base de données de concordance de localisation (10b), et l'unité de gestion de sécurité «Utility Security Server» (10a) peut être configurée pour interroger la base de données de concordance (10b) suite à la détermination d'un changement d'activité présumé de l'équipement (2).

La base de données de concordance de localisation (10b) peut avantageusement être configurée pour stocker des premières informations de localisation de l'équipement, en association avec un identifiant de l'équipement, obtenues par exemple lors d'une première connexion de l'équipement au serveur UMS (6), et/ou par pré-configuration de la base de données, effectuée par exemple lors de la mise en service de l'équipement dans le système.

L'unité de gestion de sécurité «Utility Security Server» (10a) pourra ainsi interroger la base de données de concordance de localisation (10b) avec un identifiant de l'équipement IED (2) pour lequel une deuxième information de localisation aura été obtenue suite à la détermination d'un changement d'activité présumé de l'équipement (tel que, par exemple, une tentative de connexion au serveur applicatif (6) ou un changement d'état à l'occasion de la sortie d'un mode de veille) afin de vérifier que la deuxième information de localisation est concordante avec la première information de localisation consignée dans la base de données pour l'équipement, éventuellement après avoir effectué des traitements de la première et/ou deuxième information de localisation.

L'homme du métier comprendra que les systèmes, équipements et unités proposés ne sont pas limités à une architecture particulière pour la mise en œuvre du procédé proposé.

On décrit ci-après des procédés de gestion de sécurité dans un système tel que celui illustré sur la figure 1, dans un ou plusieurs modes de réalisation.

En référence à la figure 3, on envisage un système de communication de données comprenant un premier réseau de communication de données, comme par exemple un réseau de communication de données de type EPS, comme par exemple une infrastructure de chiffrement symétrique dans le cas d'un réseau EPS.

Ce premier réseau de communication de données peut être couplé de manière opérationnelle à un deuxième réseau de communication de données, comme par exemple un réseau de communication de données de type réseau IP, comme par exemple une infrastructure de chiffrement asymétrique de type PKI dans le cas d'un réseau IP. Le premier et le deuxième réseau de communication de données sont ainsi interconnectés pour l'échange de données, notamment pour les requêtes d'accès émises par un équipement géré pour l'accès à un serveur applicatif par le biais des premier et deuxième réseaux. Par exemple, le premier réseau sera typiquement un réseau d'accès sans fil (par exemple de type 3GPP) auquel l'équipement géré s'est connecté pour émettre une requête d'accès à un serveur applicatif connecté au deuxième réseau, qui pourra typiquement être un réseau PDN (par exemple un réseau IP).

Dans un ou plusieurs modes de réalisation, la gestion de sécurité du système de communication de données pour l'échange de données entre un équipement et un serveur applicatif du système peut comprendre, dans une unité de gestion de sécurité mise en œuvre dans un nœud du deuxième réseau de communication, l'obtention (50) d'une première information de localisation de l'équipement.

Dans un ou plusieurs modes de réalisation, la première information de localisation peut être obtenue préalablement à une détermination d'un changement d'activité présumé de l'équipement géré, de sorte qu'elle puisse être connue de l'unité de gestion de sécurité avant la survenance d'un changement d'activité présumé de l'équipement occasionnant la vérification de concordance selon le procédé proposé.

Sur détermination d'un changement d'activité présumé de l'équipement géré, l'unité de gestion de sécurité peut être configurée pour obtenir (51) une deuxième information de localisation de l'équipement géré. Cette deuxième information de localisation de l'équipement peut être utilisée pour effectuer (52) une vérification de concordance entre la première information de localisation de l'équipement et cette deuxième information de localisation de l'équipement.

L'équipement géré sera présumé être à l'origine du changement d'activité déterminé, étant donné que ce changement d'activité aura été déterminé pour un identifiant d'équipement correspondant à l'équipement géré. Dans un cas nominal, l'équipement géré sera effectivement à l'origine du changement d'activité, et dans le cas d'une attaque provenant d'un équipement tiers utilisant un identifiant de l'équipement, le changement d'activité pourra être, du fait de l'utilisation d'un identifiant de l'équipement géré, déterminé comme correspondant à l'équipement géré, bien que l'équipement tiers ne soit pas l'équipement géré.

L'unité de gestion de sécurité pourra avantageusement être configurée pour obtenir une deuxième information de localisation de l'équipement en lien avec l'équipement (présumé comme étant l'équipement géré) à l'origine du changement d'activité.

La vérification de concordance entre les première et deuxième informations de localisation permettra donc de vérifier que la première information de localisation, considérée comme information de localisation de confiance car connue comme étant associée à l'équipement géré (correspondant par exemple à la localisation d'installation de l'équipement géré dans le réseau), est concordante avec la deuxième information de localisation correspondant à l'équipement (présumé comme étant l'équipement géré) à l'origine du changement d'activité.

L'unité de gestion de sécurité peut en outre être configurée pour générer (53) un message d'échec d'authentification de l'équipement lorsqu'il est déterminé que la première information de localisation de l'équipement et la deuxième information de localisation ne sont pas concordantes.

Dès lors, une attaque du réseau utilisant un équipement tiers se faisant passer pour l'équipement géré (par exemple en usurpant un identifiant de l'équipement géré) sera, dans un ou plusieurs modes de réalisation, bloquée dès lors que l'équipement tiers n'est pas localisé à une localisation concordante avec la localisation supposée de l'équipement géré (par exemple la localisation de l'équipement géré au moment de son installation dans le réseau éventuellement stockée dans une base de données sécurisée, ou une localisation de l'équipement géré préconfigurée dans la base de données sécurisée).

En outre, la détection d'un vol ou d'un simple déplacement non autorisé de l'équipement géré pourra conduire, dans un ou plusieurs modes de réalisation, à bloquer toute tentative d'accès de l'équipement à un serveur applicatif, dès lors que la nouvelle localisation de l'équipement géré ne concorde pas avec la localisation d'origine de l'équipement géré.

Le procédé proposé utilise ainsi avantageusement deux informations de localisation de l'équipement géré obtenues indépendamment l'une de l'autre pour détecter des situations d'attaques de sécurité pour l'accès à un serveur applicatif, ce qui permet d'ajouter une sécurité supplémentaire dès lors qu'un changement d'activité présumé de l'équipement est détecté, et non pas seulement sur requête d'authentification de l'équipement, présentée par exemple lorsqu'il sort d'un mode de veille.

Dans un ou plusieurs modes de réalisation, la première information de localisation de l'équipement pourra être reçue en réponse à une première requête présentée, par exemple par l'unité de gestion de sécurité du système, à un serveur du système de communication de données, par exemple un serveur de gestion d'abonnés (HSS) ou un serveur de gestion de mobilité (MME) du premier réseau de communication de données (par exemple un réseau de type 3GPP), ou un serveur de localisation situé dans le premier ou le deuxième réseau de communication de données.

Dans un ou plusieurs modes de réalisation, le système de communication de données pourra comprendre une base de données, de préférence sécurisée, utilisée pour consigner des correspondances respectives entre identifiant d'équipement géré et première information de localisation de l'équipement géré.

Dans des modes de réalisation, la base de données de localisation pourra être configurée avec des correspondances, par exemple dès lors qu'un nouvel équipement est mis en œuvre dans le système. Dans des modes de réalisation alternatifs ou complémentaires, certaines au moins des correspondances consignées dans la base de données pourront être renseignées lors d'une activité de l'équipement géré, par exemple lors de la première mise en service de l'équipement géré, en utilisant par exemple les procédés d'obtention de la première information de localisation décrits ci-après, en référence aux figures 4a - 4d.

Ainsi, avantageusement, la première information de localisation peut être obtenue en interrogeant la base de données. Par exemple, l'obtention de la première information de localisation peut comprendre l'envoi à la base de données d'une requête d'obtention d'information de localisation, et la réception en réponse de la première information de localisation de l'équipement.

Dans un ou plusieurs modes de réalisation, la deuxième information de localisation de l'équipement pourra être reçue en réponse à une deuxième requête présentée, par exemple par l'unité de gestion de sécurité du système, à un serveur du système de communication de données, par exemple un serveur de gestion d'abonnés (HSS) ou un serveur de gestion de mobilité (MME) du premier réseau de communication de données (par exemple un réseau de type 3GPP), ou un serveur de localisation situé dans le premier ou le deuxième réseau de communication de données.

Dans un ou plusieurs modes de réalisation, un changement d'activité présumé de l'équipement peut être déterminé sur réception d'une requête d'accès au serveur applicatif du système, la requête utilisant un identifiant de l'équipement géré.

Par exemple, dans un ou plusieurs modes de réalisation, dans un contexte où le premier réseau de communication de données peut être configuré pour utiliser une première fonction de sécurité, par exemple une infrastructure de chiffrement symétrique pour un réseau EPS, pour sécuriser les communications de données au sein du premier réseau, et le deuxième réseau de communication de données peut être configuré pour utiliser une deuxième fonction de sécurité, par exemple une infrastructure de chiffrement asymétrique de type PKI pour un réseau IP, pour sécuriser les communications de données au sein du deuxième réseau, un changement d'activité présumé de l'équipement peut être déterminé sur réception d'une requête d'authentification utilisant un identifiant de l'équipement dans le système selon la première ou la deuxième fonction de sécurité pour l'accès au serveur applicatif.

Dans un ou plusieurs modes de réalisation, un changement d'activité de l'équipement peut aussi être déterminé sur détection d'une sortie de l'équipement d'un mode de veille dans le premier réseau de communication de données. Ce changement d'activité peut par exemple être constitué lors d'un changement d'état de l'équipement selon une gestion d'états dans le premier et/ou dans le deuxième réseau de communication de données, par exemple lors d'un passage de l'état LTE-Idle à l'état LTE-Active dans un premier réseau de type LTE (on pourra se reporter pour une description détaillée de ces états à la spécification technique 3GPP TS 25.331).

Ainsi, le procédé proposé peut être mis en œuvre à chaque requête d'authentification de l'équipement géré pour l'accès au serveur applicatif, et ainsi fournir une sécurité supplémentaire pour l'authentification de l'équipement géré, et être en outre mis en œuvre à chaque sortie de mode veille de l'équipement (notamment les sorties de mode veille ne déclenchant pas de requête d'authentification de l'équipement), et ainsi fournir une sécurité supplémentaire pour l'accès au serveur, même lorsque cet accès ne déclenche pas une requête d'authentification pour l'accès au serveur. Par conséquent, une tentative malveillante de connexion au serveur applicatif par un équipement se faisant passer pour un équipement géré du réseau, utilisant les éléments de sécurité de la couche applicative du réseau (par exemple un login et un mot de passe) pourra avantageusement être bloquée par un message d'échec d'authentification sur détermination que la localisation de l'équipement géré authentique et la localisation de l'équipement frauduleux ne sont pas concordantes. De même, un déplacement d'un équipement géré (par exemple consécutif à un vol) pourra être détecté par le procédé proposé dès lors qu'une tentative d'utilisation de l'équipement sur le premier et/ou le deuxième réseau de communication de données est effectuée après avoir déplacé l'équipement.

Dans un ou plusieurs modes de réalisation, la deuxième information de localisation peut comprendre une troisième information de localisation obtenue sur la base d'une adresse réseau, par exemple une adresse IP comprise dans une requête d'accès au serveur applicatif, par exemple comprise dans la requête d'authentification de l'équipement selon la première ou la deuxième fonction de sécurité pour l'accès au serveur applicatif. Des traitements pourront en effet être effectués sur une adresse réseau obtenue en lien avec une tentative d'accès au serveur applicatif, afin de générer une troisième information de localisation qui pourra avantageusement être utilisée pour la vérification de concordance selon le procédé proposé.

Dans un ou plusieurs modes de réalisation, l'unité de gestion de sécurité du système peut être configurée pour transmettre à l'équipement géré, éventuellement par l'intermédiaire d'un ou plusieurs nœuds du système de communication de données, une requête de transmission d'informations de localisation, afin d'obtenir la deuxième d'information de localisation de l'équipement lorsqu'un changement d'activité présumé de l'équipement est détecté. La requête de transmission d'informations de localisation transmise à l'équipement objet du changement d'activité présumé peut utiliser tout protocole ou niveau de protocole (par exemple un protocole applicatif) convenant pour l'acquisition de données de localisation de cet équipement, afin notamment de s'assurer que la requête est présentée à l'équipement objet du changement d'activité et non pas à l'équipement authentique dans le cas de figure d'une attaque du système par un équipement tiers qui n'est pas l'équipement géré authentique. Par exemple, l'unité de gestion de sécurité du système peut être configurée pour transmettre à l'équipement géré une requête de transmission de sa position, par exemple sous la forme de coordonnées dans un système de localisation tel que le système GPS (de l'anglais « Global Positioning System »), le système Galileo, ou tout autre système de localisation convenant pour la localisation d'un équipement (comme par exemple un système de cartographie accessible via un service en ligne).

Dans un ou plusieurs modes de réalisation, l'unité de gestion de sécurité du système peut être configurée pour déterminer une situation de tentative d'accès malveillant au système dès lors qu'aucune réponse n'est obtenue à la requête de transmission d'informations de localisation transmise à l'équipement objet du changement d'activité présumé ou dès lors que cet équipement refuse de répondre à la requête (par exemple, en retournant un message de rejet de la requête), dans des modes de réalisation dans lesquels l'équipement authentique est configuré pour répondre à la requête en transmettant ses informations de localisation.

La position GPS de l'équipement géré, qui peut dans un ou plusieurs modes de réalisation être une composante de la deuxième information de localisation de l'équipement, doit dans le cas nominal, c'est-à-dire lorsqu'il n'y a pas de tentative d'accès frauduleux au serveur applicatif, être concordante avec une première information de localisation de l'équipement.

Dans un ou plusieurs modes de réalisation, la concordance entre deux informations de localisation peut être estimée selon un ou plusieurs critères de concordance. Par exemple, l'utilisation d'un premier critère de concordance peut comprendre la détermination d'une intersection non nulle entre les première et deuxième informations de localisation. L'utilisation d'un deuxième critère de concordance peut comprendre la détermination d'une distance séparant une première position identifiée par la première information de localisation d'une deuxième position identifiée par la deuxième information de localisation, et la comparaison de cette distance à un seuil prédéterminé.

Dans un ou plusieurs modes de réalisation, la détermination de concordance entre les première et deuxième informations de localisation peut comprendre le traitement de la première information de localisation et/ou de la deuxième information de localisation afin de les transformer vers un format commun aux deux informations ou, selon les cas, compatible pour pouvoir effectuer la vérification de concordance selon le mode de réalisation choisi. Ce traitement peut par exemple faire intervenir une transformation mathématique pour passer d'un format à un autre, par exemple une transformation de coordonnées pour passer d'un système de coordonnées à un autre.

Ainsi, la sécurité du système pourra être avantageusement renforcée, en générant un message d'échec d'authentification de l'équipement sur la base d'une détermination de non concordance entre les première et deuxième informations de localisation, la première information de localisation de l'équipement ayant par exemple été obtenue lors de la mise en service de l'équipement, et/ou à l'occasion de l'authentification de l'équipement au serveur applicatif selon un procédé fortement sécurisé de double authentification utilisant les fonctions de sécurité des premier (par exemple réseau cellulaire) et deuxième (par exemple réseau IP) réseaux de communication. Ce renforcement de la sécurité du système pourra en effet avantageusement bloquer les tentatives malveillantes de connexion au seul niveau applicatif à un serveur applicatif du deuxième réseau effectuées par un équipement simulant un équipement du système opérant dans un mode de veille du premier réseau de communication de données qui ne nécessite pas de réitérer une requête d'authentification dans ce premier réseau pour se connecter au serveur applicatif du deuxième réseau.

Une base de données telle que la base de données de concordance de localisation décrite ci-dessus pourra être utilisée, dans un ou plusieurs modes de réalisation, pour la mise en œuvre du procédé proposé.

Dans un ou plusieurs modes de réalisation, le premier réseau de communication pourra être un réseau de radiocommunication cellulaire, et la première information de localisation et la deuxième information de localisation pourront comprendre une ou plusieurs informations de localisation de différents types, par exemple parmi une information de localisation de type identifiant de cellule (Cell Id), zone de suivi (en anglais « Tracking Area » (TA)), « Time Difference of Arrival » (TDOA ou OTDOA), « Global Positioning System » (GPS), Galileo, Beidou, Glonass et/ou Global Navigation Satellite System (GNSS).

La figure 4a est un diagramme illustrant un exemple d'obtention d'une première information de localisation de l'équipement géré selon un ou plusieurs modes de réalisation du procédé proposé.

L'exemple de séquencement illustré sur la figure 4a peut être mis en œuvre dans l'exemple non limitatif d'architecture illustré par la figure 2c, auquel il sera fait référence pour la description de la figure 4a.

Certains des exemples de modes de réalisation décrits ci-après font intervenir différents nœuds ou fonctions illustrés par la figure 2c, comme par exemple une fonction MME. L'homme du métier comprendra toutefois que ces modes de réalisation ne sont pas limités à une architecture particulière de réseau ou de nœuds de réseau. Par exemple, la fonction MME pourra être mise en œuvre au sein d'un nœud MME/SGW combinant les mises en œuvre des fonctions MME et S-GW.

En référence à la figure 4a, on considère un exemple d'obtention d'une première information de localisation d'un équipement IED, à l'occasion de la mise en œuvre d'une procédure d'attachement de l'équipement auprès d'un réseau EPS du type spécifié par le 3GPP ou subséquemment à cette mise en œuvre. Comme illustré sur la figure, le réseau EPS pourra comprendre un réseau d'accès radio comprenant une station de base (eNodeB) contrôlant les communications radio dans une cellule de desserte de l'équipement, et un réseau cœur comprenant une fonction HSS et une fonction MME. La procédure d'attachement au réseau d'accès radio pourra entrainer la mise en œuvre d'une procédure de double authentification, auprès du réseau EPS et auprès d'un réseau PDN, pour des communications de données entre l'équipement IED et un serveur applicatif du réseau PDN. Le procédé proposé illustré sur la figure 4a utilise un serveur « Utility Security Server » (USS) fournissant une fonction de gestion de sécurité pour l'accès à un serveur applicatif « Utility Mission Server » (UMS).

Les liens de communications entre l'équipement IED et le eNode-B sont des liens de communications sans fil, tandis que les liens de communications entre le eNode B et le serveur applicatif « Utility Mission Server » sont des liens de communication filaires. D'autre part, les liens de communications entre l'équipement IED et la fonction MME sont mis en œuvre dans le réseau d'accès (réseau EPS (4) sur la figure 2c), tandis que les liens de communications entre la fonction MME et le serveur applicatif « Utility Mission Server » sont mis en œuvre dans un réseau de communication de données (réseau PDN (5) sur la figure 2c).

Comme illustré sur la figure, l'équipement IED peut initier une procédure 3GPP d'attachement réseau (procédure « 3GPP Network Attachment » décrit dans la spécification technique 3GPP TS 24.301) (« Net_Attach » sur la figure) vers la fonction HSS du réseau d'accès (réseau EPS (4) sur la figure 2c). Dans le cadre d'une double authentification de l'équipement, d'une part auprès du réseau d'accès et d'autre part auprès du réseau de communication de données, une procédure d'authentification de l'équipement IED auprès du réseau d'accès (« Auth_Proc » sur la figure) peut être mise en œuvre avec la fonction HSS, en utilisant par exemple un algorithme à clés secrètes (« Private key algorithm »). Dans le cadre de l'attachement au réseau d'accès, l'équipement IED obtiendra des informations système du réseau d'accès en écoutant un ou plusieurs canaux « balise » émis par le eNodeB dans sa cellule de desserte. Ces informations système comprennent, pour un réseau 3GPP, un paramètre de localisation sous forme d'un identifiant désignant un groupe de cellules, communément appelé code TA (de l'anglais « Tracking Area Code ») dans les réseaux d'accès radio 3GPP. Lors de son attachement au réseau d'accès, l'équipement IED pourra donc recevoir et stocker en mémoire l'information de type «TA code» (relatif à la cellule sous la couverture radio de laquelle il se trouve) émis par le réseau d'accès radio parmi les informations système transmises sur les canaux « balise » de la cellule. L'équipement IED pourra ensuite transmettre à la fonction HSS l'information de type «TA code» reçue (« TA_Info » sur la figure), éventuellement de manière répétée voire périodique.

La figure 4a illustre en outre la mise en œuvre de l'authentification de l'équipement IED auprès du réseau d'accès en utilisant un mécanisme de chiffrement/intégrité à clés secrètes (« CIPH/INT » sur la figure), puis de l'authentification de l'équipement IED auprès du réseau de communication de données (« Security_Assoc » sur la figure) pour l'accès au serveur « Utility Mission Server », en utilisant par exemple un mécanisme de sécurité différent (par exemple à clés publiques).

Dans un ou plusieurs modes de réalisation, le serveur de gestion de sécurité du système « Utility Security Server » peut être configuré pour, suite à la mise en œuvre d'une procédure d'attachement de l'équipement IED au réseau d'accès, transmettre à la fonction HSS une requête d'obtention d'une information de type TA code associé à l'équipement IED (« TA_Info_Req » sur la figure), et recevoir, en réponse à sa requête (« TA_Info_Resp » sur la figure), l'information de type «TA code» couramment associé à l'identifiant d'équipement IED fourni dans sa requête. Il peut en outre être configuré dans des modes de réalisation pour transmettre un message (TA_Info_Compl » sur la figure) à la fonction HSS pour confirmer la fin de la transaction d'obtention de TA code.

Dans un ou plusieurs modes de réalisation, le serveur de gestion de sécurité du système pourra être configuré pour mettre en œuvre des traitements de l'information de localisation de l'équipement IED obtenue sous la forme d'une information de type «TA code» afin de la mettre dans un format convenant à l'utilisation ultérieure de cette information dans le cadre du mode de réalisation choisi du procédé proposé. Par exemple, une information de zone géographique correspondant à l'information de type «TA code» pourra être générée à partir de l'information reçue de la fonction HSS.

Ainsi, une première information de localisation de l'équipement IED pourra être obtenue lors d'une procédure d'attachement au réseau d'accès de l'équipement IED ou suite à cette procédure. Dans un ou plusieurs modes de réalisation, cette première information de localisation pourra comprendre une information de type «TA code» obtenue sur requête transmise à un nœud du réseau d'accès, comme par exemple un nœud HSS, ou être générée en utilisant cette information de type «TA code».

La figure 4b est un diagramme illustrant un autre exemple d'obtention d'une première information de localisation de l'équipement géré selon un ou plusieurs modes de réalisation du procédé proposé.

L'exemple de séquencement illustré sur la figure 4b peut être mis en œuvre dans l'exemple non limitatif d'architecture illustré par la figure 2c, auquel il sera fait référence pour la description de la figure 4b.

Le diagramme de la figure 4b étant identique à celui de la figure 4a pour les procédures d'attachement au réseau, l'obtention d'une information de type TA code par l'entité HSS, et les associations de sécurité établies avec le réseau d'accès et le réseau de communication de données, leur description ne sera pas reprise.

Dans un ou plusieurs modes de réalisation, on pourra tirer avantage des différentes méthodes de localisation des mobiles qui ont été définies pour les réseaux 3GPP, et qui peuvent être utilisables avec l'équipement géré (opérant, vis-à-vis du réseau d'accès mobile comme un « UE ») en fonction des capacités dont cet équipement est doté selon différents modes de réalisation.

En effet, la fonction de localisation d'un mobile par le réseau mobile étant essentielle pour la mise en œuvre de fonctions de sécurité et de secours aux personnes, plusieurs méthodes de localisation ont été spécifiées par le 3GPP, et peuvent être mises en œuvre sur tout UE, y compris des UE destinés à être embarqués sur des nœuds de réseaux industriels basse énergie.

Les méthodes de localisation de mobile décrites notamment dans les spécifications 3GPP comprennent la méthode dite « ECID » (de l'anglais « Enhanced Cell Identity), la méthode « OTDOA » (de l'anglais « Observed Time Difference Of Arrival »), qui sont deux méthodes de localisation spécifiées dans la release 9 du 3GPP, les méthodes de géolocalisation par GPS ou par GNSS (respectivement appelées « A-GPS » (pour « Assisted Global Positioning System » et « Assisted Global Navigation Satellite System »). D'autres méthodes non décrites dans les spécifications 3GPP, telles que d'autres méthodes de géolocalisation, comme par exemple Galileo, Beidou, ou Glonass, peuvent en outre ou en variante être prises en compte, et leurs informations être par exemple fournies via ePDU (de l'anglais « external PDU »), ou dans un ou plusieurs nouveaux éléments d'information (IE).

Selon le mode de réalisation, l'équipement géré (équipement IED sur la figure) peut être configuré pour la mise en oeuvre d'une ou plusieurs de ces méthodes de localisation de mobile. Afin de disposer d'une méthode adaptable à différents types d'équipements gérés dotés notamment de capacités variables en termes de localisation de mobile, le procédé proposé pourra avantageusement inclure une procédure de recherche de capacités de l'équipement géré (échanges de messages « Loc Info Cap Acq » sur la figure). Cela permettra en outre d'adapter des requêtes d'informations de localisation transmises au mobile aux capacités spécifiques dont il est doté.

Dans un ou plusieurs modes de réalisation, la recherche de capacités de l'équipement géré en matière de localisation de mobile pourra utiliser un ou plusieurs des messages définis à cet effet pour le protocole « LTE Positioning Protocol » spécifié par la spécification 3GPP TS 37.355. On pourra par exemple se reporter à la spécification technique 3GPP TS 37.355, V15.1.0, intitulée « LTE Positioning Protocol (LPP) (Release 15) », pour une description détaillée de ce protocole et en particulier des messages et des entités fonctionnelles définis pour sa mise en oeuvre. L'homme du métier comprendra toutefois que la recherche de capacités proposée n'est pas limitée à un protocole particulier, et que tout protocole permettant d'effectuer une recherche de capacités de l'équipement géré en matière de localisation pourra être utilisé par la mise en œuvre de modes de réalisation du procédé proposé.

Dans des modes de réalisation utilisant le protocole LPP, l'équipement géré (équipement IED sur la figure) pourra être configuré pour opérer comme « Target Device », et la station de base (eNodeB sur la figure) pourra être configurée pour opérer comme « Reference Source », conformément à la spécification de ces entités dans la spécification technique 3GPP TS 37.355. En outre, la recherche de capacités pourra faire intervenir un serveur de localisation (LS sur la figure, de l'anglais « Location Server ») tel que spécifié dans la spécification technique 3GPP TS 37.355, pour les besoins de l'échange de certains messages décrits dans cette spécification technique. Avantageusement, les fonctions d'un tel serveur de localisation pourront être mises en œuvre dans le serveur de gestion de sécurité « Utility Security Server » décrit précédemment. A des fins de clarté, les serveurs « Location Server » (LS) et « Utility Security Server » (USS) sont représentés sur la figure 4b comme des entités distinctes, mais l'homme du métier comprendra toutefois que la mise en œuvre des fonctions de gestion de sécurité du système et de serveur de localisation n'est pas limitée à une architecture particulière.

Dans un ou plusieurs modes de réalisation, la recherche de capacités de l'équipement géré (procédure « Loc Info Acq (TA, gnss, otdoa, ecid) » sur la figure) pourra utiliser les procédures de transfert de capacités définies pour le protocole LPP pour obtenir des informations concernant les capacités que possède l'équipement géré, notamment relatives à l'obtention, la génération et/ou la mesure d'informations de localisation cet équipement. Ces procédures de transfert de capacités mettent en œuvre des échanges de message entre le serveur de localisation et l'UE. Ces communications de données pourront être effectuées par l'intermédiaire du nœud SGW du réseau EPC dans le cadre d'une architecture de réseau telle que celle illustrée à la figure 2c.

Ainsi, dans un ou plusieurs modes de réalisation, suivant la procédure de transfert de capacités LPP, le serveur de localisation (LS) pourra être configuré pour transmettre à l'équipement géré un ou plusieurs messages de requête de capacités (« RequestCapabilities »), en indiquant éventuellement dans un ou plusieurs de ces messages le type de capacités requis (capacités de localisation de type « TA info », de type « a-gnss », de type « otdoa », de type « ecid », d'autres capacités non normalisées par le 3GPP dans le champ « epdu », etc.). En fonction du mode de réalisation, le message de requête de capacités pourra inclure un élément d'information (IE, de l'anglais « Information Element ») de type *« a-gnss-RequestCapabilities* » pour interroger l'équipement géré sur d'éventuelles capacités de type « a-gnss », un élément d'information de type *« otdoa-RequestCapabilities* » pour interroger l'équipement géré sur d'éventuelles capacités de type « otdoa », un élément d'information de type *« ecid-RequestCapabilities* » pour interroger l'équipement géré sur d'éventuelles capacités de type « ecid », un élément d'information non normalisé par le 3GPP dans le champ *« epdu-RequestCapabilities* » pour interroger l'équipement géré sur d'éventuelles capacités non normalisées par le 3GPP, etc.

L'équipement géré, opérant une fonction « Target » du protocole LPP, sera configuré pour répondre au message reçu en transmettant au serveur de localisation un message d'indication de capacités (« Provide Capabilites »), en fournissant dans le message de réponse des informations relatives au(x) type(s) de capacités indiqués dans le message de requête. Le contenu du message de réponse sera donc fonction des informations requises par le message de requête.

Dans un ou plusieurs modes de réalisation, le serveur de localisation pourra utiliser les procédures relatives au transfert d'informations de localisation du protocole LPP pour requérir de l'équipement géré la transmission d'informations de localisation, de préférence en tenant compte des capacités de l'équipement.

Ainsi, dans un ou plusieurs modes de réalisation, suivant la procédure de transfert de d'informations de localisation LPP (« Location Information Transfer procedure »), le serveur de localisation pourra être configuré pour transmettre à l'équipement géré opérant une fonction « Target » du protocole LPP un message de requête d'informations de localisation (« Request Location Information »), en indiquant dans le message le type d'informations de localisation requis (information de localisation de type « a-gnss », de type « otdoa », de type « ecid », des informations de localisation non normalisées par le 3GPP à inscrire dans le champ« epdu », etc.). En fonction du mode de réalisation, le message de requête d'informations de localisation pourra inclure un élément d'information (IE) de type *« a-gnss-RequestLocationInformation* » pour interroger l'équipement géré sur d'éventuelles capacités de type « a-gnss », un élément d'information de type *« otdoa-RequestLocationInformation* » pour interroger l'équipement géré sur d'éventuelles capacités de type « otdoa », un élément d'information de type *« ecid-RequestLocationInformation* » pour interroger l'équipement géré sur d'éventuelles capacités de type « ecid », un élément d'information non 3GPP à fournir dans *« epdu-RequestLocationInformation* » pour interroger l'équipement géré sur des informations de localisation non normalisées par le 3GPP, etc.

L'équipement géré sera configuré pour répondre au message reçu, dans la mesure où les informations requises sont compatibles avec ses capacités et sa configuration, en transmettant au serveur de localisation un message d'informations de localisation (« Provide Location Information »), en fournissant dans le message de réponse des informations comprenant des informations de localisation correspondant à celles requises dans le message de requête. Dans des modes de réalisation, l'équipement géré pourra transmettre plusieurs messages d'informations de localisation successifs. Les informations de localisation fournies par l'équipement géré au serveur de localisation pourront être d'un type relatif au paramètre TA (pour « Tracking Area Information »), du type « a-gnss », du type « otdoa », du type « ecid », et/ou des informations non normalisées par le 3GPP dans « epdu », et plus généralement de tout type correspondant aux capacités de l'équipement géré.

Dans un ou plusieurs modes de réalisation, des échanges de messages entre la fonction HSS et la fonction MME pourront être prévus pour informer la fonction MME sur les informations de localisation que la fonction HSS est autorisé à manipuler en fonction des règles de sécurité du réseau EPS. En effet, la fonction HSS du réseau EPC utilisé peut, dans certains modes de réalisation, être capable de gérer des informations de localisation d'un ou de plusieurs types. Par exemple, une fonction HSS sera typiquement capable de gérer des informations de localisation de type TA (pour « Tracking Area Information »). La fonction HSS peut néanmoins, dans certains modes de réalisation, être dotée de capacité de stockage et de gestion d'informations de localisation de types autres que les informations de localisation de type TA. Par exemple, la fonction HSS peut être, dans certains modes de réalisation, configurée pour gérer, outre des informations de localisation de type TA, des informations de localisation du type « a-gnss », du type « otdoa », du type « ecid », et/ou des informations non normalisées par le 3GPP dans « epdu », et plus généralement de tout type correspondant aux capacités de l'équipement géré. Dans ces modes de réalisation, le procédé proposé peut prévoir que la fonction MME interroge la fonction HSS afin de connaitre les capacités du HSS pour gérer des informations de localisation, et notamment de connaitre les différents types d'information de localisation que la fonction HSS est configurée pour gérer, le cas échéant.

Dans un ou plusieurs modes de réalisation, deux messages, par exemple selon le format défini à la section 5.2.3.1 de la spécification technique 3GPP TS 29.272 V16.6.0, pourront ainsi être échangés par la fonction MME et la fonction HSS sur l'interface S6a : la fonction MME pourra envoyer un message de requête d'informations (par exemple « Authentication Info Request(Radio Control Security capabilities) ») pour demander au HSS quelles sont ses capacités de gestion d'informations de localisation (en utilisant pour ce faire un nouvel IE par exemple appelé « Radio Control Security capabilities » indiquant un ou plusieurs types de capacité de gestion d'informations de localisation que le HSS peut supporter). Sur réception du message de requête d'informations « Authentication Info Request(Radio Control Security capabilities) », la fonction HSS pourra répondre par un message de réponse (par exemple « Authentication Information Answer (Radio Control Security capabilities {TA, gnss, ...}) », pour fournir au MME (en utilisant un nouvel IE par exemple appelé « Radio Control Security capabilities {TA, gnss, ... } ») ses capacités de gestion d'informations de localisation. La réponse du HSS pourra par exemple indiquer différents types d'informations de localisation que le HSS peut gérer.

Cette information pourra ensuite être exploitée par le MME pour fournir au HSS des informations de localisation qu'il est configuré pour gérer, comme illustré par la figure 4c dans un exemple de mode de réalisation.

La figure 4c est un diagramme illustrant une possible suite de la séquence d'obtention d'une première information de localisation de l'équipement géré illustrée par la figure 4b selon un ou plusieurs modes de réalisation du procédé proposé.

Comme illustré sur la figure 4c, dans un ou plusieurs modes de réalisation, la fonction MME peut être configurée pour obtenir du serveur de localisation des informations de localisation relatives à l'équipement géré. Le serveur de localisation étant un nœud du protocole LPP, les messages de ce protocole peuvent être avantageusement utilisés pour obtenir ces informations de localisation.

Par exemple, l'entité de gestion de mobilité MME peut être configurée pour transmettre au serveur de localisation un message de requête de données d'assistance (« Request Assistance Data (Loc Info) » sur la figure), en indiquant dans le message le type de données requis (données d'assistance de type « TA info », de type « a-gnss », de type « otdoa », de type « ecid », des informations de localisation non normalisées par le 3GPP dans le champ « epdu », etc.). En fonction du mode de réalisation, le message de requête de données d'assistance pourra inclure un élément d'information (IE) de type *« a-gnss-RequestAssistanceData* » pour requérir du serveur de localisation des informations de localisation de type « a-gnss », un élément d'information de type *« otdoa-RequestAssistanceData* » pour requérir du serveur de localisation des informations de localisation de type « otdoa », un élément d'information de type *« ecid-RequestAssistanceData* » pour requérir du serveur de localisations des information de localisation de type « ecid », un élément d'information de localisation non normalisée par le 3GPP dans le champ *« epdu-RequestAssistanceData »* pour requérir du serveur de localisation des informations de localisation non normalisées par le 3GPP à fournir dans le champ « epdu », etc.

Le serveur de localisation sera configuré pour répondre au message reçu en transmettant à la fonction MME un message de fourniture de données d'assistance (« Provide Assistance Data (TA Info, gnss, ...) » sur la figure), en fournissant dans le message de réponse des informations correspondant au(x) type(s) d'informations de localisation indiqués dans le message de requête.

Les informations de localisation de l'équipement géré obtenues par la fonction MME peuvent ensuite être fournies, en tout ou partie, à la fonction HSS du réseau d'accès.

Dans un ou plusieurs modes de réalisation, des échanges de messages peuvent être définis pour le transfert d'informations de localisation depuis la fonction MME vers la fonction HSS (échange de messages « S6-Location_Info_Transfer » sur la figure). Des nouveaux messages pourront ainsi être par exemple échangés par la fonction MME et la fonction HSS sur l'interface S6a pour ce transfert d'informations de localisation entre la fonction HSS et la fonction MME visant à fournir au HSS des informations de localisation obtenues par la fonction MME. En variante, un nouvel IE pourra être introduit dans les messages « Update Location Request » et « Update Location Answer » spécifiés à la section 5.2.1 de la spécification technique 3GPP TS 29.272 v16.6.0, afin d'échanger des informations de localisation de l'équipement géré (IED) entre la fonction HSS et la fonction MME.

Dès lors que la fonction HSS a obtenu des informations de localisation de l'équipement géré, comme décrit ci-dessus, dans un ou plusieurs modes de réalisation, l'unité de gestion de sécurité (« Utility Security Server ») pourra être configurée pour transmettre à la fonction HSS une requête d'informations de localisation de l'équipement géré (message « Location Info Req() » sur la figure), en indiquant dans certains modes de réalisation dans le message le type de données de localisation requis (données de localisation de type « TA info », de type « a-gnss », de type « otdoa », de type « ecid », et/ou des informations non normalisées par le 3GPP dans « epdu », etc.). L'unité de gestion de sécurité sera en outre configurée pour recevoir, en réponse à sa requête, des informations de localisation associées à l'identifiant d'équipement fourni dans sa requête (message « Location Info Resp() » sur la figure). L'unité de gestion de sécurité pourra en outre être configurée dans des modes de réalisation pour transmettre un message à la fonction HSS pour confirmer la fin de la transaction d'obtention d'informations de localisation de l'équipement géré (message « Location Info Complete » sur la figure).

L'unité de gestion de sécurité du système pourra ainsi obtenir une première information de localisation de l'équipement géré. Selon le mode de réalisation choisi, cette première information de localisation pourra être de différent types et/ou prendre différentes formes (informations de localisation de type « TA info », de type « a-gnss », de type « otdoa », de type « ecid », et/ou des informations non normalisées par le 3GPP dans « epdu », etc.).

Comme indiqué ci-dessus, dans un ou plusieurs modes de réalisation, le serveur de gestion de sécurité du système pourra être configuré pour mettre en œuvre des traitements de l'information de localisation de l'équipement IED obtenue afin de la mettre dans un format convenant à l'utilisation ultérieure de cette information dans le cadre du mode de réalisation choisi du procédé proposé. Par exemple, une information de zone géographique correspondant aux informations de localisation de type « TA info », de type « a-gnss », de type « otdoa », de type « ecid », et/ou des informations non normalisées par le 3GPP dans « epdu » obtenues, pourra être générée à partir des informations de localisation reçues.

La figure 4d est un diagramme illustrant une autre possible suite de la séquence d'obtention d'une première information de localisation de l'équipement géré illustrée par la figure 4b selon un ou plusieurs modes de réalisation du procédé proposé.

L'exemple de séquencement illustré sur la figure 4d peut être mis en œuvre dans l'exemple non limitatif d'architecture illustré par la figure 2c, auquel il sera fait référence pour la description de la figure 4d.

La figure 4d illustre un cas de figure dans lequel l'unité de gestion de sécurité (« Utility Security Server ») transmet une requête d'informations de localisation de l'équipement géré non pas à un nœud fonctionnel du réseau EPS, comme par exemple la fonction HSS ou la fonction MME, mais à un serveur de localisation dédié du système de communication de données.

Ainsi, en référence à la figure 4d, l'unité de gestion de sécurité (« Utility Security Server », USS) pourra être configurée pour transmettre au serveur de localisation (« Location Server », LS) une requête d'informations de localisation de l'équipement géré (par exemple un message « RequestAssistanceData» du protocole LPP comme illustré sur la figure), en indiquant dans certains modes de réalisation dans le message le type de données de localisation requis (données de localisation de type « TA info », de type « a-gnss », de type « otdoa », de type « ecid », et/ou des informations non normalisées par le 3GPP dans « epdu », etc.). L'unité de gestion de sécurité sera en outre configurée pour recevoir, en réponse à sa requête, des informations de localisation associées à l'identifiant d'équipement fourni dans sa requête (par exemple un message « ProvideAssistanceData » du protocole LPP comme illustré sur la figure) du/des types requis (données de localisation de type « TA info », de type « a-gnss », de type « otdoa », de type « ecid », et/ou des informations non normalisées par le 3GPP dans « epdu », etc.).

L'unité de gestion de sécurité du système pourra ainsi obtenir une première information de localisation de l'équipement géré. Selon le mode de réalisation choisi, cette première information de localisation pourra être de différent types et/ou prendre différentes formes (informations de localisation de type « TA info », de type « a-gnss », de type « otdoa », de type « ecid », et/ou des informations non normalisées par le 3GPP dans « epdu », etc.).

Comme indiqué ci-dessus, dans un ou plusieurs modes de réalisation, le serveur de gestion de sécurité du système pourra être configuré pour mettre en œuvre des traitements de l'information de localisation de l'équipement IED obtenue afin de la mettre dans un format convenant à l'utilisation ultérieure de cette information dans le cadre du mode de réalisation choisi du procédé proposé. Par exemple, une information de zone géographique correspondant aux informations de localisation de type « TA info », de type « a-gnss », de type « otdoa », de type « ecid », et/ou des informations non normalisées par le 3GPP dans « epdu » obtenues, pourra être générée à partir des informations de localisation reçues.

La figure 5a est un diagramme illustrant un exemple d'obtention d'une deuxième information de localisation de l'équipement géré selon un ou plusieurs modes de réalisation du procédé proposé.

L'exemple de séquencement illustré sur la figure 5a peut être mis en œuvre dans l'exemple non limitatif d'architecture illustré par la figure 2c, auquel il sera fait référence pour la description de la figure 5a.

En référence à la figure 5a, on considère un exemple d'obtention d'une deuxième information de localisation d'un équipement IED, suite à la détermination d'un changement d'activité présumé de l'équipement, tel que par exemple la sortie d'un mode de veille de l'équipement. Comme illustré sur la figure, le passage en mode veille (en anglais « Idle mode », « LTE_Idle » sur la figure) de l'équipement pourra entraîner la mise en œuvre d'une procédure de détachement du réseau, qui peut comprendre l'envoi d'un message de détachement (message « Network_Detach » décrit, de même que le message « Network Attach », dans la spécification technique 3GPP TS 24.301 (Section 4.4.4.3)) par l'équipement à la fonction MME. Sur réception du message de détachement, le nœud MME pourra mettre à jour une information de contexte sauvegardée en mémoire pour l'équipement (« Ctxt Saving » sur la figure). Suite à la sortie du mode veille par l'équipement (« LTE_Active » sur la figure) une réactivation de contexte pourra être effectuée à la fonction MME, ce qui entrainera l'envoi par la fonction MME d'un message de requête d'ouverture de session (message « Session_Req » sur la figure) au serveur de gestion de sécurité du système « Utility Security Server » (USS). Dans un ou plusieurs modes de réalisation, pour passer d'un mode « LTE-Idle » à un mode « LTE-Active » (par exemple pour transmettre des données), l'équipement pourra transmettre à son eNodeB de desserte un message NAS de type « NAS : Service Request » (décrit à la section 5.3.4.1 de la spécification technique 3GPP TS 23.401). Sur réception du message, l'eNodeB transmet ce message NAS dans un message « Initial UE Message » sur l'interface S1 (entre la station de base eNodeB et la fonction MME). Comme décrit par exemple à la section 9.1.7.1 de la spécification technique 3GPP TS 36.413 v15, le message « Initial UE Message » contiendra avantageusement une information de localisation de l'équipement objet du changement d'activité (correspondant à l'équipement objet de la requête d'ouverture de session émise par le MME) de type « Tracking Area » (TA). La réactivation du contexte de l'équipement IED pourra alors être réalisée entre la station de base eNodeB et la fonction MME.

Dans un ou plusieurs modes de réalisation, l'information de localisation de type TA pourra en outre être répétée dans un nouvel IE défini pour le message « NAS : Service Request » mentionné ci-dessus afin d'être transmise à un autre niveau protocolaire à la fonction MME.

La réactivation de contexte permettra ainsi d'obtenir une information de localisation de l'équipement (IED) objet du changement d'activité, sur la base de laquelle la deuxième information de localisation de l'équipement pourra être générée pour les besoins de la vérification de concordance selon le procédé proposé. La deuxième information de localisation de l'équipement pourra ainsi être utilisée comme information de localisation courante de l'équipement requérant une nouvelle session, qui pourra être comparée à une première information de localisation obtenue antérieurement pour l'équipement et correspondant à une information de localisation de confiance détenue par le système pour l'équipement.

Dans un ou plusieurs modes de réalisation, la réactivation du contexte associé à l'équipement géré par la fonction MME pourra déclencher l'envoi par la fonction MME d'un message de requête de mise à jour de localisation (messages de requête « Update Location Req(Update_TA) » et réponse « Update_Location_Ack » sur la figure) à la fonction HSS, afin que la fonction HSS puisse mettre à jour ses données de localisation pour l'équipement IED sur la base des informations (« Update_TA ») fournies par la fonction MME. Dans des modes de réalisation, deux messages, par exemple selon le format défini à la section 5.2.3.1 de la spécification technique 3GPP TS 29.272 V16.6.0, pourront ainsi être échangés par la fonction MME et la fonction HSS sur l'interface S6a : La fonction MME pourra envoyer un message de requête de mise à jour de localisation (par exemple « Authentication Info Request(Radio Control Security capabilities {TA}) ») pour fournir à la fonction HSS la localisation de l'équipement objet de la réactivation de contexte. Sur réception du message de requête de mise à jour de localisation, la fonction HSS pourra répondre par un message de réponse (par exemple « Authentication Information Answer (Radio Control Security capabilities) », pour indiquer à la fonction MME que l'information de localisation de type « TA code » détenue par le HSS pour l'équipement a été mise à jour avec les informations de localisation reçues du MME.

Dans un ou plusieurs modes de réalisation, le serveur de gestion de sécurité du système « Utility Security Server » (USS) peut être configuré pour, suite à la réception du message de requête d'ouverture de session pour l'équipement à l'origine de la réactivation de contexte, transmettre à la fonction HSS une requête d'obtention d'une information de type « TA code » associé à l'équipement IED (message « TA_Req » sur la figure), et recevoir, en réponse à sa requête (message « TA_Resp(Update_TA) » sur la figure), l'information de type «TA code» dont la fonction HSS dispose (« Update_TA ») en lien avec l'identifiant d'équipement fourni dans la requête. Il peut en outre être configuré dans des modes de réalisation pour transmettre un message à la fonction HSS pour confirmer la fin de la transaction d'obtention de TA code.

L'information de type «TA code» reçue par le serveur de sécurité du système fournit donc une composante d'une information de localisation courante de l'équipement qui requiert une nouvelle session, et pourra avantageusement être utilisée selon un ou plusieurs modes de réalisation du procédé proposé pour déterminer si cet équipement est ou non l'équipement IED.

Dans un ou plusieurs modes de réalisation, le serveur de gestion de sécurité du système pourra être configuré pour mettre en œuvre des traitements de l'information de localisation de l'équipement objet de la requête d'ouverture de session émise par le MME obtenue sous la forme d'une information de type «TA code» afin de la mettre dans un format convenant à l'utilisation ultérieure de cette information dans le cadre du mode de réalisation choisi du procédé proposé. Par exemple, une information de zone géographique correspondant à l'information de type «TA code» pourra être générée à partir de l'information reçue de la fonction HSS.

Ainsi, une deuxième information de localisation de l'équipement objet de la requête d'ouverture de session émise par le MME pourra être obtenue suite à la réception d'une requête d'ouverture de nouvelle session émise par un équipement. Dans un ou plusieurs modes de réalisation, cette deuxième information de localisation pourra comprendre une information de type «TA code» obtenue sur requête transmise à un nœud du réseau d'accès, comme par exemple un nœud HSS, ou être générée en utilisant cette information de type «TA code».

Cette deuxième information de localisation pourra être avantageusement utilisée pour déterminer si la requête d'ouverture de nouvelle session est ou non présentée dans le cadre d'une attaque de sécurité du système par un équipement se faisant passer pour l'équipement IED. Cette détermination pourra comprendre une vérification de concordance entre la première information de localisation de l'équipement IED (par exemple une information de type «TA code» obtenue à l'occasion d'une procédure d'attachement de l'équipement au premier réseau, sur lequel des traitements pourront éventuellement être effectués) et la deuxième information de localisation (par exemple l'information de type «TA code» obtenue à l'occasion d'une requête d'ouverture de session, sur lequel des traitements pourront aussi éventuellement être effectués).

La figure 5b est un diagramme illustrant un autre exemple d'obtention d'une deuxième information de localisation de l'équipement géré selon un ou plusieurs modes de réalisation du procédé proposé.

L'exemple de séquencement illustré sur la figure 5b peut être mis en œuvre dans l'exemple non limitatif d'architecture illustré par la figure 2c, auquel il sera fait référence pour la description de la figure 5b.

Les modes de réalisation illustrés par le diagramme de la figure 5b reprenant les opérations illustrées par la figure 5a pour les procédures de détachement du réseau et de réactivation de contexte, leur description ne sera pas reprise et il est fait référence à leur description ci-dessus.

Comme illustré sur la figure, la réception par la fonction MME d'un message de réactivation de contexte comprenant une information de localisation de l'équipement émetteur déclenchera l'envoi par la fonction MME d'un message de requête d'ouverture de session (message « New Session Req » sur la figure) au serveur de gestion de sécurité du système « Utility Security Server ».

Dans un ou plusieurs modes de réalisation, le serveur de gestion de sécurité du système « Utility Security Server » peut être configuré pour, suite à la réception du message de requête d'ouverture de session, transmettre au serveur de localisation un message de protocole LPP pour requérir des informations de localisation courante pour l'équipement IED (message « Request Assistance Data (Loc info) » sur la figure).

En fonction du mode de réalisation, le serveur de localisation peut alors acquérir des informations de localisation de l'équipement objet de la requête d'ouverture de session émise par le MME comprenant une information de type TA code comme décrit ci-dessus.

Dans un ou plusieurs modes de réalisation, le serveur de localisation peut ainsi obtenir une information de type TA code associée à l'équipement objet de la requête d'ouverture de session émise par le MME en transmettant un message de requête d'information de localisation à l'entité de gestion de mobilité MME (message LPP « Request Location Info(TA) sur la figure) et recevoir, en réponse à sa requête (message LPP «Provide Location Info(TA Info) » sur la figure), l'information de type «TA code» dont la fonction MME dispose. Comme décrit ci-dessus en référence à la figure 5a, la fonction MME aura obtenu, suite au changement d'activité de l'équipement ayant donné lieu à la requête d'ouverture de session, des informations de localisation de type « TA code » relatives à l'équipement objet de la requête d'ouverture de session émise par le MME (référence « TA Acq » sur la figure). L'information de type «TA code» retournée par la fonction MME au serveur de localisation pourra avoir été mise à jour en interrogeant l'équipement objet de la requête d'ouverture de session émise par le MME suite à la réception du message de requête d'information de localisation, de sorte qu'elle représentera un TA code courant de l'équipement objet de la requête d'ouverture de session émise par le MME.

Le serveur de localisation sera alors en mesure de répondre à la requête du serveur de gestion de sécurité du système (message LPP « Provide Assistance Data(TA info) » sur la figure) avec les informations de localisation de l'équipement (« TA_info ») à l'origine de la requête d'ouverture de session acquises (comprenant une information de type TA code comme décrit ci-dessus).

Ces informations de localisation de l'équipement objet de la requête d'ouverture de session émise par le MME de type « TA code » reçues par le serveur de sécurité du système fournissent des composantes d'une information de localisation courante de l'équipement qui requiert une nouvelle session, et pourront avantageusement être utilisées selon un ou plusieurs modes de réalisation du procédé proposé pour déterminer si cet équipement est ou non l'équipement IED.

Dans un ou plusieurs modes de réalisation, le serveur de gestion de sécurité du système pourra être configuré pour mettre en œuvre des traitements de ces informations de localisation de l'équipement objet de la requête d'ouverture de session émise par le MME afin au besoin de les mettre dans un format convenant à l'utilisation ultérieure de ces informations dans le cadre du mode de réalisation choisi du procédé proposé. Par exemple, une information de zone géographique correspondant à l'information de type «TA code» pourra être générée à partir de l'information reçue de la fonction MME.

Ainsi, une deuxième information de localisation de l'équipement IED pourra être obtenue suite à la réception d'une requête d'ouverture de nouvelle session émise par un équipement. Dans un ou plusieurs modes de réalisation, cette deuxième information de localisation pourra comprendre une information de type TA code obtenue sur requête transmise à un nœud du réseau d'accès, comme par exemple la fonction MME).

Cette deuxième information de localisation pourra être avantageusement utilisée pour déterminer si la requête d'ouverture de nouvelle session est ou non présentée dans le cadre d'une attaque de sécurité du système par un équipement se faisant passer pour l'équipement IED. Cette détermination pourra comprendre une vérification de concordance entre la première information de localisation de l'équipement IED (par exemple une information de type TA code obtenue comme décrit ci-dessus par exemple à l'occasion d'une procédure d'attachement de l'équipement au premier réseau, sur laquelle des traitements pourront éventuellement être effectués) et la deuxième information de localisation (par exemple une information de type TA code obtenue à l'occasion d'une requête d'ouverture de session, sur laquelle des traitements pourront aussi éventuellement être effectués).

La figure 5c est un diagramme illustrant un autre exemple d'obtention d'une deuxième information de localisation de l'équipement géré selon un ou plusieurs modes de réalisation du procédé proposé.

L'exemple de séquencement illustré sur la figure 5c peut être mis en œuvre dans l'exemple non limitatif d'architecture illustré par la figure 2c, auquel il sera fait référence pour la description de la figure 5c.

Les modes de réalisation illustrés par le diagramme de la figure 5c reprenant les opérations illustrées par la figure 5a pour les procédures de détachement du réseau et de réactivation de contexte leur description ne sera pas reprise et il est fait référence à leur description ci-dessus. De plus, le diagramme de la figure 5c étant identique à celui de la figure 5b pour la procédure de requête d'ouverture de session, sa description ne sera pas reprise et il est fait référence à sa description ci-dessus.

Dans un ou plusieurs modes de réalisation, le serveur de gestion de sécurité du système « Utility Security Server » peut être configuré pour, suite à la réception du message de requête d'ouverture de session, transmettre au serveur de localisation un message de protocole LPP pour requérir des informations de localisation courante pour l'équipement IED (message « Request Assistance Data (Loc info) » sur la figure).

**Dans** un ou plusieurs modes de réalisation, le serveur de localisation peut alors acquérir des informations de localisation de l'équipement objet de la requête d'ouverture de session émise par le MME comprenant des informations de localisation de type correspondant aux capacités de l'équipement (Opérations « Loc Info Acq (gnss, otdoa, ecid...) » sur la figure). En ce qui concerne les informations de localisation de type « TA code », comme décrit ci-dessus en référence à la figure 5b, la fonction MME aura obtenu, suite au changement d'activité de l'équipement ayant donné lieu à la requête d'ouverture de session, des informations de localisation de type « TA code » relatives à l'équipement objet de la requête d'ouverture de session émise par le MME (référence « TA Acq » sur la figure).

Dans un ou plusieurs modes de réalisation, le serveur de localisation peut s'enquérir des capacités de l'équipement IED pour savoir quels types d'informations de localisation (information de localisation de type « a-gnss », de type « otdoa », de type « ecid », des informations non normalisées par le 3GPP dans « epdu », etc.) peuvent être acquis pour l'équipement IED, par exemple selon la procédure décrite ci-dessus en lien avec la Figure 4b. En fonction des capacités spécifiques de l'équipement IED, le serveur de localisation peut obtenir des informations de localisation courante de l'équipement objet de la requête d'ouverture de session émise par le MME, correspondant à aux capacités de l'équipement IED (information de localisation de type « a-gnss », de type « otdoa », de type « ecid », et/ou des informations non normalisées par le 3GPP dans « epdu », etc.). Ces informations de localisation courante peuvent alors avantageusement être utilisées comme composantes d'une deuxième information de localisation pour les besoins d'une vérification de concordance selon le procédé proposé. En particulier, l'unité de gestion de sécurité peut être configurée pour vérifier que les informations de localisation de l'équipement IED, obtenues par exemple selon un des procédés illustrés par les figures 4a - 4d, sont concordantes avec les informations de localisation de l'équipement à l'origine d'un changement d'activité, comme par exemple une requête d'accès au serveur applicatif (« Utility Mission Server »), obtenues par exemple selon un des procédés illustrés par les figures 5a - 5c.

Lorsque des informations de localisation correspondant aux capacités de l'équipement IED ne peuvent être obtenues pour l'équipement à l'origine du changement d'activité, l'unité de gestion de sécurité peut être configurée pour émettre un refus d'accès au serveur applicatif (« Utility Mission Server »), par exemple sous la forme d'un message d'échec d'authentification de l'équipement.

Dans un ou plusieurs modes de réalisation, le serveur de localisation peut aussi obtenir une information de type TA code associée à l'équipement objet de la requête d'ouverture de session émise par le MME en transmettant un message de requête d'information de localisation à l'entité de gestion de mobilité MME (message LPP « Request Location Info (TA)) et recevoir, en réponse à sa requête (message LPP «Provide Location Info (TA Info) »), l'information de localisation de type « TA code » dont la fonction MME dispose. L'information de type «TA code» retournée par la fonction MME au serveur de localisation pourra avoir été mise à jour en interrogeant l'équipement objet de la requête d'ouverture de session émise par le MME suite à la réception du message de requête d'information de localisation, de sorte qu'elle représentera un TA code courant de l'équipement objet de la requête d'ouverture de session émise par le MME.

Le serveur de localisation sera alors en mesure de répondre à la requête du serveur de gestion de sécurité du système (message LPP « ProvideAssistanceData(TA info, gnss, ...) ») avec les informations de localisation de l'équipement objet de la requête d'ouverture de session émise par le MME acquises (comprenant, en fonction du mode de réalisation, des informations de localisation de type correspondant aux capacités de l'équipement à l'origine de la requête (information de localisation de type « a-gnss », de type « otdoa », de type « ecid », et/ou des informations non normalisées par le 3GPP dans « epdu », etc.) et/ou une information de type TA code comme décrit ci-dessus).

Ces informations de localisation de l'équipement objet de la requête d'ouverture de session émise par le MME reçues par le serveur de sécurité du système fournissent des composantes d'une information de localisation courante de l'équipement qui requiert une nouvelle session, et pourront avantageusement être utilisées selon un ou plusieurs modes de réalisation du procédé proposé pour déterminer si cet équipement est ou non l'équipement IED.

Dans un ou plusieurs modes de réalisation, le serveur de gestion de sécurité du système pourra être configuré pour mettre en œuvre des traitements de ces informations de localisation de l'équipement objet de la requête d'ouverture de session émise par le MME afin au besoin de les mettre dans un format convenant à l'utilisation ultérieure de ces informations dans le cadre du mode de réalisation choisi du procédé proposé. Par exemple, une information de zone géographique correspondant à l'information de type «TA code» pourra être générée à partir de l'information reçue de la fonction MME.

Ainsi, une deuxième information de localisation de l'équipement IED pourra être obtenue suite à la réception d'une requête d'ouverture de nouvelle session émise par un équipement. Dans un ou plusieurs modes de réalisation, cette deuxième information de localisation pourra comprendre des informations de localisation de l'équipement objet de la requête d'ouverture de session émise par le MME comprenant des informations de localisation de type correspondant aux capacités de l'équipement et/ou une information de type TA code obtenues sur requête transmise à un nœud du réseau d'accès, comme par exemple la fonction MME, ou être générée en utilisant une ou plusieurs de ces informations de localisation (par exemple en les combinant).

Cette deuxième information de localisation pourra être avantageusement utilisée pour déterminer si la requête d'ouverture de nouvelle session est ou non présentée dans le cadre d'une attaque de sécurité du système par un équipement se faisant passer pour l'équipement IED. Cette détermination pourra comprendre une vérification de concordance entre la première information de localisation de l'équipement IED (par exemple des informations de localisation de l'équipement IED comprenant des informations de localisation de type correspondant aux capacités de l'équipement IED et/ou une information de type TA code obtenues comme décrit ci-dessus par exemple à l'occasion d'une procédure d'attachement de l'équipement au premier réseau, sur lesquelles des traitements pourront éventuellement être effectués) et la deuxième information de localisation (par exemple des informations de localisation de l'équipement objet de la requête d'ouverture de session émise par le MME comprenant des informations de localisation de type correspondant aux capacités de cet équipement et/ou une information de type TA code obtenues à l'occasion d'une requête d'ouverture de session, sur lequel des traitements pourront aussi éventuellement être effectués).

La figure 6 illustre un exemple d'architecture d'équipement pour la mise en œuvre du procédé proposé selon un ou plusieurs modes de réalisation.

En référence à la figure 6, le dispositif 100 comprend un contrôleur 101, couplé de manière opérationnelle à une interface de communication 102 et à une mémoire 103, qui pilote un module de gestion de sécurité 104.

L'interface de communication 102 comprend une ou plusieurs unités de communication, chacune configurée pour émettre et/ou recevoir des données selon un ou plusieurs protocoles de communication de données (par voie filaire ou sans-fil), par exemple de type WLAN, Ethernet, UMTS, LTE, LTE-A.

Le contrôleur 101 est configuré pour piloter le module de gestion de sécurité 104 et l'interface de communication 102 pour la mise en œuvre d'un ou de plusieurs modes de réalisation du procédé proposé.

Le module de gestion de sécurité 104 est configuré pour la mise en œuvre du procédé proposé par un serveur connecté à un réseau de communication de données auquel est connecté un serveur applicatif, pour la gestion de l'authentification des équipements demandant un accès au serveur applicatif pour l'échange de données dans le cadre de l'exécution d'une application, comme par exemple une application de service. En particulier, le module de gestion de sécurité 104 peut être configuré pour remplir les fonctions et accomplir les actes décrits dans la présente description pour la mise en œuvre du procédé proposé par une unité de gestion de sécurité et/ou un serveur de gestion de concordance connecté à une base de données de concordance.

Le dispositif 100 peut être un ordinateur, un réseau d'ordinateurs, un composant électronique, ou un autre appareil comportant un processeur couplé de manière opérationnelle à une mémoire, ainsi que, selon le mode de réalisation choisi, une unité de stockage de données, et d'autres éléments matériels associés comme une interface de réseau et un lecteur de support pour lire un support de stockage amovible et écrire sur un tel support (non représentés sur la figure). Le support de stockage amovible peut être, par exemple, un disque compact (CD), un disque vidéo/polyvalent numérique (DVD), un disque flash, une clé USB, une mémoire SSD, etc. En fonction du mode de réalisation, la mémoire, l'unité de stockage de données ou le support de stockage amovible contient des instructions qui, lorsqu'elles sont exécutées par le contrôleur 101, amènent ce contrôleur 101 à effectuer ou contrôler les parties module de gestion de sécurité 104 et interface de communication 102 des exemples de mise en œuvre du procédé proposé décrits dans la présente description. Le contrôleur 101 peut être un composant implémentant un processeur ou une unité de calcul pour la gestion de communications selon le procédé proposé et le contrôle des unités 102 et 104 du dispositif 100.

Le dispositif 100 peut être mis en œuvre sous forme logicielle, sous forme matérielle, comme un circuit intégré spécifique application (ASIC), ou sous forme d'une combinaison d'éléments matériels et logiciels, comme par exemple un programme logiciel destiné à être chargé et exécuté sur un composant de type FPGA (Field Programmable Gate Array). De même, le module de gestion de sécurité 104 peut être mis en œuvre sous forme logicielle, sous forme matérielle, comme un ASIC, ou sous forme d'une combinaison d'éléments matériels et logiciels, comme par exemple un programme logiciel destiné à être chargé et exécuté sur un composant de type FPGA.

En fonction du mode de réalisation choisi, certains actes, actions, évènements ou fonctions de chacune des méthodes décrites dans le présent document peuvent être effectués ou se produire selon un ordre différent de celui dans lequel ils ont été décrits, ou peuvent être ajoutés, fusionnés ou bien ne pas être effectués ou ne pas se produire, selon le cas. En outre, dans certains modes de réalisation, certains actes, actions ou évènements sont effectués ou se produisent concurremment et non pas successivement.

Bien que décrits à travers un certain nombre d'exemples de réalisation détaillés, le procédé proposé et le dispositif pour la mise en œuvre d'un mode de réalisation du procédé comprennent différentes variantes, modifications et perfectionnements qui apparaîtront de façon évidente à l'homme de l'art, étant entendu que ces différentes variantes, modifications et perfectionnements font partie de la portée de l'invention, telle que définie par les revendications qui suivent.

## Revendications

1. Procédé de gestion de sécurité dans un système de communication de données pour l'échange de données entre un équipement et un serveur applicatif du système, le système comprenant un premier réseau de communication de données, couplé de manière opérationnelle à un deuxième réseau de communication de données, le procédé comprenant, dans une unité de gestion de sécurité du système mise en œuvre dans un nœud du deuxième réseau de communication :
obtenir (50) une première information de localisation de l'équipement ;
sur détermination d'un changement d'activité présumé de l'équipement, obtenir (51) une deuxième information de localisation de l'équipement ;
effectuer (52) une vérification de concordance entre la première information de localisation de l'équipement et la deuxième information de localisation de l'équipement ; et
lorsque la première information de localisation de l'équipement et la deuxième information de localisation de l'équipement ne sont pas concordantes, générer (53) un refus d'accès au serveur applicatif pour l'équipement,
dans lequel la première information de localisation de l'équipement est reçue en réponse à une première requête présentée à l'équipement ou à un serveur du système de communication de données.

2. Procédé selon la revendication 1, dans lequel le système comprend en outre une base de données comprenant une correspondance entre un identifiant de l'équipement dans le système et la première information de localisation de l'équipement, le procédé comprenant en outre : envoyer à la base de données une requête d'obtention d'information de localisation, la requête comprenant l'identifiant de l'équipement, et recevoir en réponse la première information de localisation de l'équipement.

3. Procédé selon l'une quelconque des revendications précédentes, dans lequel la deuxième information de localisation de l'équipement est reçue en réponse à une deuxième requête présentée à l'équipement objet du changement d'activité présumé ou à un serveur du système de communication de données suite à la détermination du changement d'activité présumé de l'équipement.

4. Procédé selon l'une quelconque des revendications 1 ou 3, dans lequel le serveur est un serveur de localisation, un serveur de gestion de mobilité ou un serveur de gestion d'abonnés.

5. Procédé selon l'une quelconque des revendications précédentes, dans lequel le premier réseau de communication de données utilise une première fonction de sécurité pour sécuriser les communications de données au sein du premier réseau, et le deuxième réseau de communication de données utilise une deuxième fonction de sécurité pour sécuriser les communications de données au sein du deuxième réseau, et dans lequel le changement d'activité présumé de l'équipement est déterminé sur réception d'une requête d'authentification utilisant un identifiant de l'équipement dans le système selon la première ou la deuxième fonction de sécurité pour l'accès au serveur applicatif.

6. Procédé selon la revendication 5, dans lequel la deuxième information de localisation comprend une troisième information de localisation obtenue sur la base d'une adresse réseau comprise dans la requête d'authentification de l'équipement selon la première ou la deuxième fonction de sécurité pour l'accès au serveur applicatif.

7. Procédé selon l'une quelconque des revendications précédentes, dans lequel le changement d'activité présumé de l'équipement est déterminé sur détection d'une sortie de l'équipement d'un mode de veille dans le premier réseau de communication de données.

8. Dispositif de gestion de sécurité dans un système de communication de données, comprenant un processeur, une interface de communications de données et une mémoire couplées de manière opérationnelle au processeur, dans lequel le processeur est configuré pour la mise en œuvre d'un procédé selon l'une quelconque des revendications 1 à 7.

9. Programme d'ordinateur, chargeable dans une mémoire associée à un processeur, et comprenant des portions de code pour la mise en œuvre des étapes d'un procédé selon l'une quelconque des revendications 1 à 7 lors de l'exécution dudit programme par le processeur.

## Patentansprüche

1. Verfahren zur Sicherheitsverwaltung in einem Datenkommunikationssystem für den Datenaustausch zwischen einer Einrichtung und einem Anwendungsserver des Systems, wobei das System ein erstes Datenkommunikationsnetz umfasst, das betriebsbereit mit einem zweiten Datenkommunikationsnetz gekoppelt ist, wobei das Verfahren in einer Sicherheitsverwaltungseinheit des Systems, die in einem Knoten des zweiten Datenkommunikationsnetzes implementiert ist, umfasst:
Erhalten einer ersten Standortinformation der Einrichtung;
bei Bestimmung einer vermuteten Aktivitätsänderung der Einrichtung, Erhalten einer zweiten Standortinformation der Einrichtung;
Durchführen einer Übereinstimmungsprüfung zwischen der ersten Standortinformation der Einrichtung und der zweiten Standortinformation der Einrichtung; und
wenn die erste Standortinformation der Einrichtung und die zweite Standortinformation der Einrichtung nicht übereinstimmen, Erzeugen einer Zugriffsverweigerung auf den Anwendungsserver für die Einrichtung,
wobei die erste Standortinformation der Einrichtung als Antwort auf eine erste Anforderung empfangen wird, die an die Einrichtung oder an einen Server des Datenkommunikationssystems gestellt wird.

2. Verfahren nach Anspruch 1, wobei das System ferner eine Datenbank umfasst, die eine Entsprechung zwischen einer Einrichtungskennung im System und der ersten Standortinformation der Einrichtung umfasst, wobei das Verfahren ferner umfasst: Senden einer Anforderung zum Erhalten von Standortinformation an die Datenbank, wobei die Anforderung die Einrichtungskennung umfasst, und Empfangen der ersten Standortinformation der Einrichtung als Antwort.

3. Verfahren nach einem der vorhergehenden Ansprüche, wobei die zweite Standortinformation der Einrichtung als Antwort auf eine zweite Anforderung empfangen wird, die an die Einrichtung, die Gegenstand der vermuteten Aktivitätsänderung ist, oder an einen Server des Datenkommunikationssystems nach der Bestimmung der vermuteten Aktivitätsänderung der Einrichtung gestellt wird.

4. Verfahren nach einem der Ansprüche 1 oder 3, wobei der Server ein Standortserver, ein Mobilitätsverwaltungsserver oder ein Teilnehmerverwaltungsserver ist.

5. Verfahren nach einem der vorhergehenden Ansprüche, wobei das erste Datenkommunikationsnetz eine erste Sicherheitsfunktion verwendet, um die Datenkommunikation innerhalb des ersten Netzes zu sichern, und das zweite Datenkommunikationsnetz eine zweite Sicherheitsfunktion verwendet, um die Datenkommunikation innerhalb des zweiten Netzes zu sichern, und wobei die vermutete Aktivitätsänderung der Einrichtung bei Empfang einer Authentifizierungsanforderung unter Verwendung einer Einrichtungskennung im System gemäß der ersten oder zweiten Sicherheitsfunktion für den Zugriff auf den Anwendungsserver bestimmt wird.

6. Verfahren nach Anspruch 5, wobei die zweite Standortinformation eine dritte Standortinformation umfasst, die auf der Grundlage einer Netzwerkadresse erhalten wird, die in der Authentifizierungsanforderung der Einrichtung gemäß der ersten oder zweiten Sicherheitsfunktion für den Zugriff auf den Anwendungsserver enthalten ist.

7. Verfahren nach einem der vorhergehenden Ansprüche, wobei die vermutete Aktivitätsänderung der Einrichtung bei Erkennung eines Verlassens des Standby-Modus durch die Einrichtung im ersten Datenkommunikationsnetz bestimmt wird.

8. Sicherheitsverwaltungsvorrichtung in einem Datenkommunikationssystem, umfassend einen Prozessor, eine Datenkommunikationsschnittstelle und einen Speicher, die betriebsbereit mit dem Prozessor gekoppelt sind, wobei der Prozessor konfiguriert ist, um ein Verfahren nach einem der Ansprüche 1 bis 7 zu implementieren.

9. Computerprogramm, das in einen einem Prozessor zugeordneten Speicher geladen werden kann und Codeabschnitte zur Implementierung der Schritte eines Verfahrens nach einem der Ansprüche 1 bis 7 umfasst, wenn das Programm vom Prozessor ausgeführt wird.

## Claims

1. A method of security management in a data communication system for the exchange of data between an equipment and an application server of the system, the system comprising a first data communication network, operatively coupled to a second data communication network, the method comprising, in a security management unit of the system implemented in a node of the second data communication network:
obtaining a first location information of the equipment;
upon determination of a presumed change of activity of the equipment, obtaining a second location information of the equipment;
performing a matching check between the first location information of the equipment and the second location information of the equipment; and
whenever the first location information of the equipment and the second location information of the equipment do not match, generating an access denial to the application server for the equipment.
wherein the first location information of the equipment is received in response to a first request submitted to the equipment or to a server of the data communication system.

2. Method according to claim 1, wherein the system further comprises a database comprising a correspondence between an equipment identifier in the system and the first location information of the equipment, the method further comprising: sending to the database a request to obtain location information, the request comprising the equipment identifier, and receiving in response the first location information of the equipment.

3. Method according to any one of the preceding claims, wherein the second location information of the equipment is received in response to a second request submitted to the equipment subject to the presumed change of activity or to a server of the data communication system following the determination of the presumed change of activity of the equipment.

4. Method according to any one of claims 1 or 3, wherein the server is a location server, a mobility management server or a subscriber management server.

5. Method according to any one of the preceding claims, wherein the first data communication network uses a first security function to secure data communications within the first network, and the second data communication network uses a second security function to secure data communications within the second network, and wherein the presumed change of activity of the equipment is determined upon receipt of an authentication request using an equipment identifier in the system according to the first or second security function for access to the application server.

6. Method according to claim 5, wherein the second location information comprises a third location information obtained on the basis of a network address comprised in the authentication request of the equipment according to the first or second security function for access to the application server.

7. Method according to any one of the preceding claims, wherein the presumed change of activity of the equipment is determined upon detection of an exit of the equipment from a standby mode in the first data communication network.

8. A security management device in a data communication system, comprising a processor, a data communications interface and a memory operatively coupled to the processor, wherein the processor is configured to implement a method according to any one of claims 1 to 7.

9. A computer program, loadable into a memory associated with a processor, and comprising portions of code for implementing the steps of a method according to any one of claims 1 to 7 when said program is executed by the processor.
